# EUROPÄISCHE PATENTSCHRIFT

(11) **EP 3 229 935 B1**
(45) Veröffentlichungstag und Bekanntmachung des Hinweises auf die Patenterteilung: **24.10.2018**
(21) Anmeldenummer: 14811776.5
(22) Anmeldetag: 11.12.2014
(51) Int. Cl.: B01D 46/00, B01D 46/12, D01H 11/00

(54) **LUFTREINIGUNGSANLAGE**
AIR PURIFICATION INSTALLATION
INSTALLATION DE PURIFICATION D'AIR

(43) Veröffentlichungstag der Anmeldung: 18.10.2017
(73) Patentinhaber: Luwa Air Engineering AG, 8610 Uster (CH)
(72) Erfinder: REMSCHAK, André, CH-8335 Hittnau (CH); WEHNER, Jürgen, CH-8623 Wetzikon (CH)
(74) Vertreter: Schaad, Balass, Menzl & Partner AG
(86) Internationale Anmeldenummer: PCT/EP2014/003309
(87) Internationale Veröffentlichungsnummer: WO 2016/091270

(56) Entgegenhaltungen:
- DE-A1- 3 830 991
- US-A- 5 507 851

## Beschreibung

Die vorliegende Erfindung betrifft eine Luftreinigungsanlage gemäss Patentanspruch 1.

Der Einsatz von Luftreinigungsanlagen ist insbesondere in der Textilindustrie von grosser Bedeutung, da beim Fertigen von Textilprodukten grosse Mengen an Staub und Fusseln in die Luft freigesetzt werden. Wenn sich solche Verunreinigungen auf dem Textilgarn ablagern, hat dies einen erheblichen negativen Einfluss auf die Qualität der gefertigten Textilprodukte. Aus diesem Grund werden in Textilproduktionsstätten üblicherweise Filteranlagen eingesetzt, um die Luft von den mitgeführten Staub- und Stoffpartikeln zu befreien. Solche Filtereinrichtungen sind für gewöhnlich raumfüllend und weisen meterhohe Filterwände mit Filtermatten auf, welche von der zu reinigenden Luft durchströmt werden. Die in der Schmutzluft mitgeführten Staub- und Faserpartikel werden so an den Filtermatten abgeschieden. Die im Laufe der Betriebsdauer der Luftreinigungsvorrichtung zunehmende Ablagerungsmenge der abgeschiedenen Partikel geht allerdings mit einer Abnahme der Durchlässigkeit der Filter einher. Damit eine gleichbleibende Filterleistung gewährleistet werden kann, müssen die Filterflächen deshalb in regelmässigen Zeitabständen gereinigt bzw. von abgelagerten Staub- und Fasermaterialien befreit werden. Bekannte Reinigungsmöglichkeiten sind etwa das Rückspülen bzw. Gegenstromblasen, das Abstreifen, Abklopfen oder Absaugen der Filterflächen.

In der DE 3 527 656 A1 wird beispielsweise ein Abstreifer offenbart, der zum Reinigen der Filterfläche entlang deren Oberfläche auf und ab bewegt wird, um die an der Filterfläche abgelagerten Partikel abzustreifen und in einen darunterliegenden Aufnahmeraum zu befördern.

Für Luftreinigungsanlagen in der Textilindustrie haben sich solche Abstreifer allerdings als nachteilig erwiesen, da sich die im Luftstrom mitgeführten Fasern aufgrund elektrostatischer Aufladung vermehrt zu grösseren Ansammlungen - sogenannten Faserzöpfen - zusammenlagern. Diese Faserzöpfe bleiben oftmals am Abstreifer haften, was dessen Funktionsfähigkeit stark behindert.

Aus diesem Grund werden in der Textilindustrie vermehrt Absaugvorrichtungen eingesetzt, welche entlang der Filterflächen bewegt werden, um die abgelagerten Verschmutzungen von den Filterflächen abzusaugen.

In der DE 3830991 wird etwa eine Filtervorrichtung offenbart, welche eine Fangvorrichtung mit mehreren V-förmigen filterwirksamen Nischen aufweist. Zur Reinigung der Nischen wird die Saugnase eines auf einem Träger befestigten Saugorgans frontseitig in eine Nische eingeführt und darin hoch und runter bewegt. Entweder ist jeder Nische ein eigenes Saugorgan zugeordnet oder ein Saugorgan ist für die Reinigung mehrerer Nischen zuständig und wird nach der Abreinigung einer Nische rückwärts aus dieser rausgefahren, ausserhalb der Fangvorrichtung horizontal seitwärts zu einer nächsten Nische bewegt und vorwärts mit der Saugnase voran in die nächste Nische eingeführt. Für die Reinigung der Nischen und den Wechsel von einer Nische in die nächste werden die Saugorgane bzw. deren Träger somit in drei Raumrichtungen bewegt - nämlich in Vertikalrichtung innerhalb den Nischen auf und ab; in horizontaler Richtung vor und zurück sowie seitwärts hin und her. Um solche mehrdimensionalen Bewegungsabläufe realisieren zu können, sind nicht nur baulich aufwändige Konstruktionen sondern auch komplizierte Antriebs- und Steuerungssysteme notwendig. Ausserdem wird ausserhalb der Filternischen der Fangvorrichtung viel Raum benötigt, um das Saugorgan von einer Nische in die nächste zu manövrieren.

Ein weiteres Problem im Zusammenhang mit Saugeinrichtungen in Luftreinigungsanlagen basiert darauf, dass es insbesondere an Stellen, die für die Saugdüsen nicht oder nur schlecht zugänglich sind, mit der Zeit zu übermässigen Faser- und Staubansammlungen kommt, welche zu Verstopfungen und damit zu einem Blockieren der Absaugdüse führen können.

Es ist daher eine Aufgabe der vorliegenden Erfindung, eine aufbau- und steuerungsmässig vereinfachte Luftreinigungsanlage bereitzustellen, die ein besseres bzw. grösseres Verhältnis von Filterkapazität zu Raumbedarf aufweist, wenig störungsanfällig ist und eine zuverlässige Reinigung der Filter während des Betriebs erlaubt.

Diese Aufgabe wird durch eine Luftreinigungsanlage gelöst, welche die Merkmale des Patentanspruchs 1 aufweist. Bevorzugte Ausführungsformen der Erfindung sind Gegenstand der abhängigen Ansprüche.

Die Luftreinigungsanlage gemäss dem Patentanspruch 1 weist eine Trennwand auf, die zur räumlichen Trennung eines stromaufwärts angeordneten Schmutzluftraums von einem stromabwärts angeordneten Reinluftraum vorgesehen ist. Die Begriffe "stromaufwärts" und "stromabwärts" beziehen sich in der vorliegenden Anmeldung stets auf die Richtung des Luftstroms, welcher von Seiten des Schmutzluftraums durch filteraktive Abschnitte der Trennwand in den Reinluftraum strömt.

Die Trennwand umfasst einen Tragrahmen und mehrere vom Tragrahmen in Richtung des Schmutzluftraums abstehende Filterkästen. Besagte Filterkästen weisen jeweils mindestens eine, bevorzugt zwei, sich vom Tragrahmen in den Schmutzluftraum erstreckende Filterwand bzw. Filterwände auf und sind in den stromabwärts angeordneten Reinluftraum offen. Bevorzugt sind die Filterkästen lediglich rückseitig, also in den Reinluftraum offen, während sie stromaufwärts durch Filterkastenwände (einschliesslich der mindestens einen Filterwand) sowie oben und unten durch eine obere bzw. untere dichte Abdeckung begrenzt sind.

Die Filterwände umfassen jeweils eine Filterfläche, die für Luft durchlässig ist. Mit Ausnahme dieser Filterflächen ist der Schmutzluftraum in der Regel dichtend, also luftundurchlässig, durch die Trennwand vom Reinluftraum abgetrennt. Luft aus dem Schmutzluftraum kann somit aufgrund der Trennwand lediglich durch die Filterflächen der Filterwände in den Reinluftraum gelangen. Im einfachsten Fall sind Schmutzluftraum und Reinluftraum in einem gemeinsamen Kasten angeordnet, welcher auf einer durchgehenden oder zumindest teilweise als (Gitter-)Rost ausgebildeten Bodenfläche positioniert ist. Der Tragrahmen der Trennwand definiert in diesem Falle bevorzugt den äusseren Umfang der Trennwand und entspricht in seiner Breite und Höhe der Breite und Höhe des Kastens. So kann der Tragrahmen senkrecht auf der Bodenfläche montiert werden, wodurch er untenseitig durch die Bodenfläche, obenseitig durch die Decke sowie beidseitig durch die Seitenwände des Kastens begrenzt wird.

Bei der erfindungsgemässen Luftreinigungsanlage wird staubund faserbeladene Luft vom Schmutzluftraum durch die Filterwände in den Reinluftraum geleitet, wobei die mitgeführten Staub- und Fasermaterialien an den Filterwänden abgeschieden werden. "Geleitet" heisst in diesem Zusammenhang, dass beispielsweise aufgrund einer Druckdifferenz zwischen dem Schmutzluftraum und dem Reinluftraum ein Luftstrom erzeugt wird. Dafür kann beispielsweise der Reinluftraum mit einer Unterdruckquelle, beispielsweise einem Ventilator, verbunden sein.

Erfindungsgemäss sind die Filterkästen derart am Tragrahmen der Trennwand angeordnet, dass einander zugewandte Filterwände von benachbarten Filterkästen jeweils eine Filtertasche bilden. Eine Filtertasche erstreckt sich dabei in vertikaler Richtung vom unteren Ende bis zum oberen Ende der Filterkästen. Dank der Bildung von Filtertaschen ist die filterwirksame Fläche deutlich grösser, als dies bei einer einzigen ebenen Filterwand der Fall wäre. Die Filtertaschen sind erfindungsgemäss stromaufwärtsseitig - also in Richtung des Schmutzluftraums - sowie unten offen, während sie stromabwärtsseitig - also in Richtung des Reinluftraums - durch die Filterwände benachbarter Filterkästen sowie gegebenenfalls durch den Tragrahmen begrenzt sind. Besonders bevorzugt sind die Filtertaschen nicht nur stromaufwärtsseitig und unten sondern auch oben offen.

Im Sinne der vorliegenden Erfindung dienen die Filterwände der Reinigung der Luft, was bedeutet, dass sie für Luft zumindest stellenweise durchlässig sind. Solche Filterwände sind dem Fachmann ausreichend bekannt und weisen in der Regel Durchlässe auf, die mit einem Filtermaterial abgedeckt sind. Das Filtermaterial kann beispielsweise ein metallisches oder textiles Gewebe (insbesondere ein Flies) oder ein sonstiges luftdurchlässiges, filterwirksames Substrat sein, an dem stromaufwärtsseitig die aus der zu filternden Luft abgeschiedenen Verunreinigungen, wie Fasern oder dergl., abgeschieden werden.

Gemäss einer besonders bevorzugten Ausführungsform umfassen die Filterwände einen äusseren, selbsttragenden Rahmen, welcher gegebenenfalls zusätzlich mit Verbindungsstreben verstärkt ist. Eine solche Rahmen-Konstruktion als Träger für das filterwirksame Substrat hat gegenüber den sonst üblichen Trägern aus Streckmetall den Vorteil, dass die lichte Nettofilterfläche erhöht werden kann.

Weiter umfasst die Luftreinigungsanlage eine Filterreinigungseinrichtung mit einer Horizontalschiene, an welcher ein Wagen in horizontaler Richtung hin und her bewegbar geführt ist, sowie eine am Wagen befestigte Vertikalschiene, an welcher eine Saugdüse zum Abreinigen der Filterwände einer jeweiligen Filtertasche in vertikaler Richtung hoch und runter bewegbar geführt ist. Die Filterreinigungseinrichtung ist in der Regel im Schmutzluftraum angeordnet.

Die Horizontalschiene erstreckt sich normalerweise parallel zum Tragrahmen, und die Vertikalschiene ist normalerweise stromaufwärtsseitig der Trennwand bzw. der Filterkästen angeordnet. Ausgehend von der Vertikalschiene ragt die Saugdüse mit ihrem freien Ende in eine Filtertasche hinein und ist in der Regel am gegenüberliegenden anderen Ende über eine flexible Luftabfuhrleitung, z.B. einen Abluftschlauch, mit einer Unterdruckquelle verbunden. Zur Reinigung der Filterwände einer jeweiligen Filtertasche weist die Saugdüse eine Saugöffnung auf, durch welche an den Filterwänden abgeschiedenes Fasermaterial und Staub abgesaugt werden können.

Der Vorteil der erfindungsgemässen Luftreinigungsanlage gegenüber bekannten Vorrichtungen aus dem Stand der Technik liegt insbesondere darin, dass eine Filterwand, insbesondere auch eine nicht-ebene Filterwand, mit einer einzigen Saugdüse abgereinigt werden kann und die Saugdüse dafür lediglich in zwei Raumdimensionen bewegt wird. Dies wird erfindungsgemäss dadurch erreicht, dass die jeweils von einander zugewandten Filterwänden benachbarter Filterkästen gebildeten Filtertaschen nicht nur stromaufwärtsseitig sondern auch unten offen sind. Die Begriffe "unten" und "oben" beziehen sich hierbei auf die Luftreinigungsvorrichtung im montierten Zustand. Aufgrund der unten offenen Filtertaschen ist es möglich, dass die Saugdüse zum Wechseln von einer Filtertasche in eine benachbarte Filtertasche unter dem die beiden Filtertaschen trennenden Filterkasten hindurch bewegt wird. Mit anderen Worten: die Saugdüse wird innerhalb einer Filtertasche nach unten bewegt, bis sie sich ausserhalb der Filtertasche befindet und unter dem dazwischenliegenden Filterkasten hindurch von der einen Filtertasche in eine benachbarte Filtertasche bewegt werden kann.

Dank der erfindungsgemässen Lösung kann die Saugdüse von einer Filtertasche in eine benachbarte Filtertasche bewegt werden, ohne dass sie dafür, wie etwa gemäss der DE 3830991, rückwärts (also Richtung stromaufwärts) aus den Filtertaschen ausgefahren werden muss. Dies hat den vorteilhaften Effekt, dass stromaufwärtsseitig der Filterkästen kein zusätzlicher Platz zum Ausfahren der Saugdüse benötigt wird und somit einen Einsatz von Filterkästen mit einer grösseren Längenausdehnung - d.h. Filterkästen, die sich weit in den Schmutzluftraum hinein erstrecken - ermöglicht wird, ohne dafür die Dimensionen des Schmutzluftraums vergrössern zu müssen.

Die vorliegende Erfindung stellt daher eine Luftreinigungsanlage mit einer grösseren effektiven Filteroberfläche und somit grösseren Filterkapazität bereit, ohne dafür im Vergleich zu Anlagen aus dem Stand der Technik zusätzlichen Raum zu beanspruchen. Ausserdem ermöglicht die erfindungsgemässe Luftreinigungsanlage eine kostengünstige und effiziente Reinigung der gesamten Filterwandfläche mittels einer einzigen Saugdüse.

Gleichzeitig erlaubt die erfindungsgemässe Luftreinigungsanlage eine Abreinigung der Filterflächen während des Betriebs. Das bedeutet, dass die Luftreinigungsanlage während des Reinigungsvorgangs der Filtertaschen nicht ausgeschaltet werden muss. Dies macht die Luftreinigungsanlage besonders geeignet zur Verwendung in der industriellen Textilmaterialverarbeitung, da dort die fortlaufende Entfernung der an den Filterwänden laufend anfallenden Verschmutzungen, wie Faserflug und dergleichen, für einen störungsfreien Verarbeitungsprozess von grosser Wichtigkeit ist.

Ein weiterer Vorteil der Erfindung liegt darin, dass im Zuge des Filtertaschenwechsels mit der Saugdüse auch gleichzeitig die Bodenfläche unter den Filterkästen gereinigt werden kann. Dies verhindert, dass sich an den Filterwänden abgeschiedenes Staub- und Fasermaterial auf dem Boden ansammelt und es dadurch zu Verstopfungen und/oder Blockierungen der Saugdüse kommen kann.

Um die Bewegung der Saugdüse beim Filtertaschenwechsel unterhalb des Filterkastens bzw. der Filterkästen nicht zu behindern, sind letztere bevorzugt ausschliesslich vom Tragrahmen gehalten. Das heisst, dass ausser dem Tragrahmen bevorzugt keine zusätzlichen Stützelemente für die Filterkästen vorhanden sind und sich stromaufwärtsseitig des Tragrahmens und unterhalb der Filterkästen ein freier unterer Zwischenraum befindet, in welchem die Saugdüse bewegt werden kann.

Damit die Saugdüse die Filterwände über deren gesamten Höhe abreinigen kann, muss die Saugdüse, bzw. ihre Saugöffnung, mindestens bis zum oberen Ende der Filterwände bewegt werden. Daher befindet sich besonders bevorzugt auch zwischen der oberen Begrenzung des Schmutzluftraums (in der Regel die Decke des Kastens) und einer durch das obere Ende der Filterkästen definierten Horizontalebene ein freier oberer Zwischenraum, damit die Saugdüse gegebenenfalls in vertikaler Richtung über die Höhe des Filterkastens hinaus bewegt werden kann. Ausserdem erlaubt der freie obere Zwischenraum eine deckenseitige Anordnung der Horizontalschiene. Hierbei befindet sich bevorzugt nicht nur die Horizontalschiene selber sondern auch der an der Horizontalschiene entlang geführte Wagen und das obere Ende der Vertikalschiene im freien oberen Zwischenraum, stromaufwärts der Filterkästen.

Im Sinne einer vereinfachten Steuerung ist die Saugdüse vorzugsweise während des Filtertaschenwechsels lediglich vertikal in Verlängerung der Filtertaschen und unterhalb der Filterkästen parallel zur Horizontalschiene bewegbar. Während im Stand der Technik die Saugdüse für den Filtertaschenwechsel Bewegungen in drei Raumrichtungen, nämlich vertikal (z-Richtung), horizontal entgegen der Luftstromrichtung zum Ausfahren der Saugdüse aus den Filtertaschen (y-Richtung) und horizontal entlang der Filterwand (x-Richtung) ausführen musste, kann die Bewegung der Saugdüse bei der erfindungsgemässen Luftreinigungsanlage auf zwei Raumrichtungen, nämlich die z-Richtung und die x-Richtung, beschränkt werden.

Gemäss einer bevorzugten Ausführungsform umfasst der Tragrahmen eine unterseitig an die Filterkästen anschliessende Bodenleiste, welche eine Bodenebene definiert, von welcher Bodenebene die Filterkästen in vertikaler Richtung beabstandet sind. (In der Regel verläuft die Bodenebene in der Ebene der Bodenfläche.) Aufgrunddessen, dass die Saugdüse erfindungsgemäss für den Filterwechsel unter den Filterkästen hindurch bewegt wird, ist klar, dass die Höhe des unteren Zwischenraums zwischen den Filterkästen und der Bodenebene, bzw. der Abstand zwischen den Filterkästen und der Bodenebene, idealerweise grösser ist als die vertikale Abmessung der Saugdüse. Besonders bevorzugt schliesst die Bodenleiste des Tragrahmens unmittelbar unterseitig an die Filterkästen an, sodass der maximale Abstand zwischen den Filterkästen und der Bodenebene wenigstens annähernd der Höhe der Bodenleiste entspricht.

Anstelle eines Tragrahmens mit einer unterseitig an die Filterkästen anschliessenden Bodenleiste kann die Luftreinigungsanlage allerdings auch auf einer Bodenfläche positioniert werden, die unterhalb der Filterkästen eine Vertiefung oder eine durch die Höhe der Bodenfläche durchgehende Bodenöffnung aufweist, damit die Saugdüse zum Durchführen des Filtertaschenwechsels unterhalb der Filterkästen hindurch bewegt werden kann. Da direkt unterhalb der Filterkästen in diesem Falle keine Bodenfläche vorhanden ist, entfällt bei dieser Ausführungsform die Bodenreinigungsfunktion der Saugdüse.

Gemäss einer besonders bevorzugen Ausführungsform ist unterhalb des Schmutzluftraums, insbesondere direkt unterhalb an die Bodenfläche angrenzend, ein Bodenluftkanal vorgesehen, welcher über eine Luftzufuhröffnung in der Bodenfläche mit dem Schmutzluftraum in Verbindung steht. Der Bodenluftkanal dient der Zuleitung der Schmutzluft, etwa aus einem angrenzenden Maschinenraum, in den Schmutzluftraum, was eine besonders platzsparende Anordnung der Luftreinigungsanlage in einem industriellen Betrieb ermöglicht.

Besonders bevorzugt sind Schmutzluftraum und Bodenluftkanal lediglich durch die Bodenfläche getrennt. Durch eine oder mehrere Öffnungen in der Bodenfläche kann so die Schmutzluft aus dem Bodenluftkanal in den Schmutzluftraum gelangen. Die Luftzufuhröffnung wird dabei durch eine oder mehrere Öffnungen (z.B. in der Form eines Bodenrostes) in der Bodenfläche gebildet.

Besonders bevorzugt wird die Luftzufuhröffnung zumindest teilweise durch eine Bodenöffnung unterhalb der Filterkästen gebildet. Die Bodenöffnung erlaubt in diesem Falle nicht nur ein Manövrierraum der Saugdüse unterhalb der Filterkästen zum Durchführen des Filtertaschenwechsels sondern eben gleichzeitig auch als Verbindungsstelle mit dem Bodenluftkanal. Dies hat ausserdem den Vorteil, dass grössere Ansammlungen von Staub- und Textilfasern, die aufgrund der Schwerkraft von den Filterwänden abfallen, sich im Bodenluftkanal ansammeln und von dort im Zuge einer periodisch durchgeführten Reinigung direkt über den Bodenluftkanal aus der Luftfilteranlage entfernt werden können. So wird einem Verstopfen der Saugdüse entgegengewirkt, was wiederum die Störungsanfälligkeit der Filterreinigungseinrichtung deutlich reduziert.

Was die Ausgestaltung der Saugdüse betrifft, so ist diese in der Regel als Hohlkörper ausgebildet und weist bevorzugt einen vorzugsweise wenigstens annähernd ebenen Düsenboden sowie zwei von diesem bevorzugt wenigstens annähernd rechtwinklig abstehende Düsenseitenwände auf, welche jeweils benachbart zum Düsenboden eine Saugöffnung aufweisen. Eine zum Düsenboden benachbarte Saugöffnung ist insbesondere für eine Reinigung des Bodens unterhalb der Filterkästen vorteilhaft.

Um möglichst die gesamte Filterfläche reinigen zu können, entspricht die Länge der Saugdüse mindestens in etwa der Tiefe der Filtertaschen. Ausserdem erstreckt sich die Saugöffnung bevorzugt über die ganze Länge der Düsenseitenwand. Besonders bevorzugt ist die Saugöffnung schlitzförmig oder als Lochreihe ausgebildet und auf die Oberfläche der Filterwand gerichtet, um eine möglichst starke und präzise Saugwirkung zu erreichen.

In einer bevorzugten Ausführungsform umfasst die Saugdüse zwei Düsenkammern, die mit einer jeweiligen Düsenöffnung kommunizieren. Bei dieser Ausführungsform ist ausserdem eine Umschalteinrichtung vorhanden, mittels welcher eingestellt werden kann, ob bei der Saugdüse im Wechsel jeweils nur eine Düsenkammer in Betrieb ist, oder ob beide Düsenkammern gleichzeitig genutzt werden. Sind beide Düsenkammern in Betrieb, so kann die Saugdüse als Doppelsaugdüse gleichzeitig beide Filterwände einer Filtertasche reinigen. Wenn nur eine Düsenkammer mit Saugluft beaufschlagt wird, so kann zwar nur die der aktiven Düsenkammer zugewandte Filterwand gereinigt werden, dafür mit doppelter Saugwirkung. Beispielsweise kann so während der Aufwärtsbewegung der Saugdüse in einer Filtertasche zuerst die eine Filterwand abgereinigt werden und nachdem die Saugdüse das obere Ende Filtertasche erreicht hat, wird die Saugluftzuleitung umgeschaltet, wodurch die andere Düsenkammer mit Saugluft beaufschlagt wird und während der nachfolgenden Abwärtsbewegung der Saugdüse so die andere Filterwand der Filtertasche gereinigt wird.

An dieser Stelle sei darauf hingewiesen, dass die Saugdüse - unabhängig davon, ob sie nun zwei Düsenkammern oder nur eine zentrale Düsenkammer aufweist und ob beide Saugöffnungen gleichzeitig mit Saugluft beaufschlagt werden oder nicht - in einer jeweiligen Filtertasche auch mehrmals hintereinander hoch und runter bewegt werden kann, um die Reinigungswirkung zu erhöhen.

Die Filterkästen weisen, in Draufsicht gesehen, bevorzugt eine rechteckige oder eine sich stromaufwärtsseitig verjüngende, insbesondere dreieckige oder trapezförmige, äussere Form auf. Die äussere Form bzw. die horizontale Querschnittsfläche der Filterkästen ist ausserdem bevorzugt über die ganze Höhe der Filterkästen gleichbleibend.

Angesichts dessen, dass die Filtertaschen jeweils von einander zugewandten Filterwänden benachbarter Filterkästen gebildet sind, weisen die Filtertaschen bevorzugt einen rechteckigen oder einen sich stromabwärtsseitig verjüngenden, insbesondere dreieckigen oder trapezförmigen, Horizontalquerschnitt auf.

Da die auf die Filterwandoberfläche wirkende Saugkraft mit zunehmendem Abstand der Saugöffnung von der Filterwandoberfläche rasch abnimmt, ist die äussere Form der Saugdüse (in Draufsicht) bevorzugt wenigstens annähernd an diejenige der Filtertaschen angepasst. Besonders bevorzugt entspricht die äussere Form der Saugdüse (in Draufsicht) somit derjenigen der Filtertaschen und die Saugdüse ist im horizontalen Querschnitt bevorzugt lediglich geringfügig kleiner als der Horizontalquerschnitt der Filtertaschen.

Besonders bevorzugt weist die Saugdüse eine eher flache Form, also eine geringe vertikale Ausdehnung, auf. Dies hat den Vorteil, dass nur ein geringer Abstand zwischen Bodenfläche und Unterseite der Filterkästen notwendig ist, um die Saugdüse für den Filtertaschenwechsel unterhalb der Filterkästen hindurch bewegen zu können.

Gemäss einer bevorzugten Ausführungsform sind die Filterkästen einzeln am Tragrahmen austauschbar und weisen bevorzugt einen stabilen Filterkastenrahmen auf, an welchem die zugeordneten Filterwände gehalten sind. So können die Filterkästen und/oder die Filterwände einzeln entfernt und bei Bedarf ersetzt werden. Ausserdem können so die näher an der Mitte am Tragrahmen angeordneten und daher oftmals stärker beanspruchten Filterkästen bei Bedarf früher ersetzt werden als die in der Regel weniger beanspruchten randseitigen Filterkästen.

Besonders bevorzugt weisen alle Filterkästen eine einheitliche Form auf, da dies den Aufbau und insbesondere das Auswechseln einzelner Filterkästen oder Filterwänden erleichtert. Sind alle Filterkästen gleichartig ausgebildet, so weisen sie in der Regel mindestens zwei ausgehend vom Tragrahmen in den Schmutzluftraum ragende Filterwände auf. Bei den randseitigen Filterkästen ist allerdings nur eine, nämlich die weiter innen am Tragrahmen angeordnete Filterwand Teil einer Filtertasche, während die andere, äussere Filterwand der Seitenwand des Schmutzluftraums zugewandt ist und daher nicht Teil einer Filtertasche im Sinne der vorliegenden Anmeldung, also einer beidseitig filterwirksamen Filtertasche, sein kann. Damit sich im Raum zwischen Seitenwand des Schmutzluftraums und äusserster Filterwand eines randseitigen Filterkastens keine Staub- und Faserpartikel ansammeln, liegt die äusserste Filterwand entweder dichtend an der Seitenwand an oder der Raum ist stromaufwärtsseitig mit einer Frontabdeckung luftdicht abgedeckt.

Was die Anordnung der Filterkästen am Tragrahmen der Luftreinigungsanlage betrifft, so können in vertikaler Richtung auch gegebenenfalls zwei oder mehr Filterkästen übereinander angeordnet sein. Eine übereinander gestapelte Anordnung der Filterkästen hat einerseits den Vorteil, dass die filteraktive Fläche der Luftreinigungsanlage an die äusseren Gegebenheiten - z.B. die Raumhöhe - angepasst werden können, und andererseits, dass aufgrund des geringeren Gewichts und der geringeren Grösse der Transport und die Montage der einzelnen Filterkästen deutlich vereinfacht wird.

In den nachfolgenden Abschnitten wird nunmehr auf bevorzugten Antriebs- und Steuerungsvarianten der Saugdüsenbewegung näher eingegangen.

Gemäss einer bevorzugten Ausführungsform ist die Saugdüse mit einem endlosen Zugorgan, beispielsweise einer Kette, einem Zahnriemen oder Riemen, verbunden, welches in einem oberen und unteren Endbereich der Vertikalschiene jeweils um eine Umlenkrolle geführt ist. Der Vertikalschiene ist vorzugsweise ein am Wagen befestigter Vertikalantrieb zugeordnet, welcher eine der Umlenkrollen, vorzugsweise die obere, antreibt.

Das Zugorgan ist bevorzugt mit einem oder zwei Schalterbetätigungselement(en) ausgestattet, welche(s) die obere bzw. untere Endlage der Saugdüse bei ihrer Auf- und Abbewegung (bzw. hoch und runter Bewegung) innerhalb einer Filtertasche definiert bzw. definieren. Sobald die Saugdüse die untere oder obere Endlage erreicht, wird mithilfe des (jeweiligen) Schalterbetätigungselements ein Endschalter betätigt, welcher beim Vertikalantrieb ein Wechsel der Antriebsrichtung initiiert. Es können insbesondere zwei Endschalter und ein Schalterbetätigungselement vorgesehen sein oder lediglich ein Endschalter und dafür zwei Schalterbetätigungselemente. Bei zwei Endschaltern sind diese beispielsweise auf der Höhe der unteren bzw. oberen Endlage der Saugdüse positioniert. Das Schalterbetätigungselement kann in diesem Falle auf der Höhe der Saugdüse am Zugorgan oder an der Saugdüse selber befestigt sein und den jeweiligen Schalter betätigen, sobald die Saugdüse eine Endlage erreicht. In Falle von einem Endschalter sind in der Regel zwei Schalterbetätigungselemente vorhanden, die am Zugorgan in einem Abstand, welcher der Distanz zwischen unterer und oberer Endlage entspricht, befestigt sind.

Als Vertikalantrieb kann etwa ein reversierender Elektromotor eingesetzt werden, welcher vorzugsweise über induktive, mechanische oder lichtsensorische Endschalter gesteuert ist. Endschalter-gesteuerte Antriebe sind dem Fachmann hinlänglich bekannt. Als Endschalter werden beispielsweise mechanische Schalter mit Federkontakt, induktive Schalter (Positionssensoren) oder Lichtschranken eingesetzt.

Die Bewegung der Saugdüse unterhalb der Filterkästen von einer Filtertasche in die nächste erfolgt bevorzugt durch Bewegwegen des Wagens mit der daran befestigten Vertikalschiene entlang der Horizontalschiene. Besonders bevorzugt wird der Wagen mithilfe eines Antriebs, etwa eines Getriebe- und/oder Elektromotors, entlang der Horizontalschiene bewegt. Der Antrieb ist vorzugsweise auf dem Wagen angeordnet und erlaubt, mindestens ein Wagenrad reversierend anzutreiben. Die Steuerung des Getriebe- und/oder Elektromotors erfolgt bevorzugt ebenfalls über induktive, mechanische oder lichtsensorische Endschalter.

Bei einer bevorzugten Ausführungsform sind die Antriebsgeschwindigkeit des Wagens in horizontaler Richtung und die Antriebsgeschwindigkeit der Saugdüse in vertikaler Richtung für den Reinigungsprozess der Filterwand individuell einstellbar. Beispielsweise ist die Vertikalbewegung der Saugdüse vorzugsweise schneller als die Horizontalbewegung des Wagens.

Um die von der Saugdüse beim Filtertaschenwechsel zurückzulegende Strecke zwischen zwei benachbarten Filtertaschen zu definieren, ist der Horizontalschiene bevorzugt eine Codierschiene zugeordnet, welche für jede Filtertasche ein Codierelement, vorzugsweise eine Ausnehmung, aufweist. Der Wagen weist bei dieser Ausführungsform ein Sensorelement (z.B. induktiver kontaktloser Positionssensor, mechanischer Schalter oder Lichtschranke) auf, welches dazu dient, die Bewegung des Wagens entlang der Horizontalschiene bei Erkennen eines Codierelements zu stoppen und vorzugsweise die Vertikalbewegung der Saugdüse zu iniziieren.

Gemäss einer besonders bevorzugten Ausführungsform umfasst die Luftreinigungsanlage eine vorzugsweise am Wagen angeordnete Steuerungseinheit, welche für die Saugdüse - ausgehend von einer ersten Filtertasche - das folgende Bewegungsmuster steuert:
a) Aktivieren des Vertikalantriebs zum Bewegen der Saugdüse in einer Filtertasche entlang der vertikalen Bewegungsbahn von einer unteren Endposition in eine obere Endposition und wieder zurück;
b) Aktivieren des Horizontalantriebs zum Vorwärtsbewegen der Saugdüse, nach deren Rückkehr in die untere Endposition, unter dem zwischenliegenden Filterkasten in eine benachbarte Filtertasche;
c) Wiederholen der Schritte a) und b) bis zum Erreichen einer letzten Filtertasche;
d) Aktivieren des Vertikalantriebs zum Bewegen der Saugdüse in der letzten Filtertasche entlang der vertikalen Bewegungsbahn von einer unteren Endposition in eine obere Endposition und wieder zurück,
e) Aktivieren des Horizontalantriebs zum Rückwärtsbewegen der Saugdüse, nach deren Rückkehr in die untere Endposition, unter allen zwischenliegenden Filterkästen in die erste Filtertasche.

Die vorliegende Erfindung wird nachfolgend anhand der Figuren näher beschrieben. Die Figuren zeigen rein schematisch:
- Fig. 1: in perspektivischer Ansicht eine Ausführungsform einer erfindungsgemässen Luftreinigungsanlage mit mehreren an einem Tragrahmen gehaltenen, jeweils zwei Filterwände aufweisenden Filterkästen sowie einer Filterreinigungs-einrichtung umfassend eine Saugdüse zur Reinigung der Filterwände;
- Fig. 2: in perspektivischer Ansicht einen Filterkastenrahmen eines einzelnen V-förmigen Filterkastens;
- Fig. 3: in perspektivischer Ansicht den Tragrahmen aus Fig. 1 mit daran befestigten Filterkästen sowie einem noch nicht montierten Filterkasten;
- Fig. 4: in Seitenansicht die Luftreinigungsanlage aus Fig. 1;
- Fig. 5: in vergrößerter Darstellung einen unteren Endschalter mit einem induktiven Positionssensor zur Steuerung der Vertikalbewegung der Saugdüse;
- Fig. 6: in Frontalansicht die in Fig. 1 gezeigte Luftreinigungsanlage;
- Fig. 7: in Draufsicht die in Fig. 1 gezeigte Luftreinigungsanlage;
- Fig. 8: in Seitenansicht eine Ausführungsform einer Saugdüse;
- Fig. 9: in perspektivischer Ansicht eine weitere Ausführungsform einer erfindungsgemässen Luftreinigungsanlage mit einem offenen Boden;
- Fig. 10: in Seitenansicht eine weitere Ausführungsform einer erfindungsgemässen Luftreinigungsanlage mit einem offenen Boden und einem Bodenluftkanal; und
- Fig. 11: ein Schemabild eines zweidimensionalen Bewegungsweges der Saugdüse im Zuge eines Reinigungszyklus, während welchem alle Filtertaschen gereinigt werden.

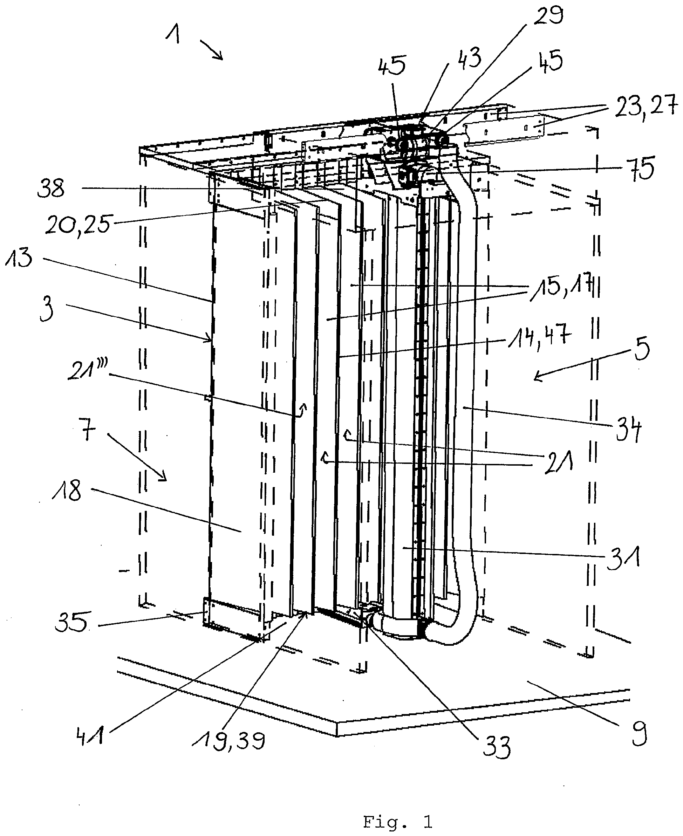

Die in Fig. 1 perspektivisch dargestellte Luftreinigungsanlage 1 dient dem Abscheiden von Verunreinigungen aus der Luft, insbesondere von textilen Verunreinigungen aus der Abluft industrieller Textilherstellungs- oder Textilverarbeitungsbetriebe. In solchen Betrieben muss die Luft in der Regel kontinuierlich von Staub und Faserflug (Faserfragmenten, Textilresten, Faserflocken, usw.) gereinigt werden, welcher bei der Arbeit an Textilmaschinen, Spinnereimaschinen, Web- oder Strickmaschinen entsteht.

Die Luftreinigungsanlage 1 weist eine Trennwand 3 auf, die einen stromaufwärts angeordneten Schmutzluftraum 5 von einem stromabwärts angeordneten Reinluftraum 7 räumlich abtrennt, wobei abgesehen einer Bodenfläche 9 die Begrenzungsflächen (Seitenwände und Decke) der Räume nur mit gestrichelten Linien angedeutet sind. Wie bereits einleitend erwähnt, beziehen sich die Begriffe "stromaufwärts" und "stromabwärts" stets auf die Richtung des Luftstroms, welcher von Seiten des Schmutzluftraums 5 durch filteraktive Abschnitte der Trennwand 3 in den Reinluftraum 7 strömt.

Die zu reinigende Luft wird beispielsweise aus einem Maschinenraum einer Textilverarbeitungsanlage abgesaugt und strömt durch eine nicht gezeigte Luftzufuhröffnung in den Schmutzluftraum 5 ein, wird dann durch die Luftreinigungsanlage 1 gereinigt und gelangt anschliessend in den Reinluftraum 7, von welchem die gereinigte Luft wieder in den Maschinenraum oder gegebenenfalls an die Umgebung abgegeben werden kann. Die zu reinigende Luft kann in bekannter Art und Weise (etwa durch nicht dargestellte Luftfördermittel, wie ein Ventilator, Gebläse oder dergl.) in Strömungsrichtung vom Schmutzluftraum 5 in Richtung Reinluftraum 7 (stromabwärts) gefördert werden.

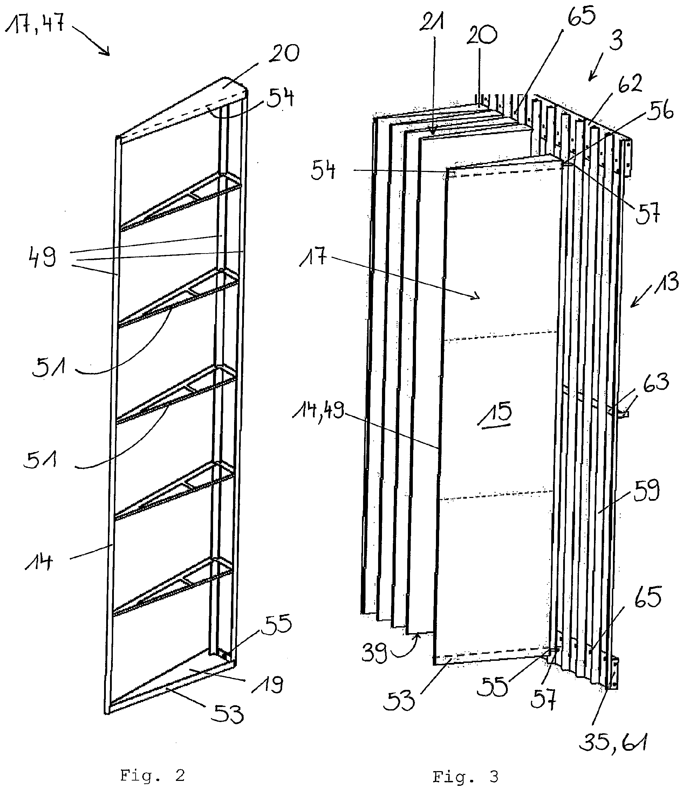

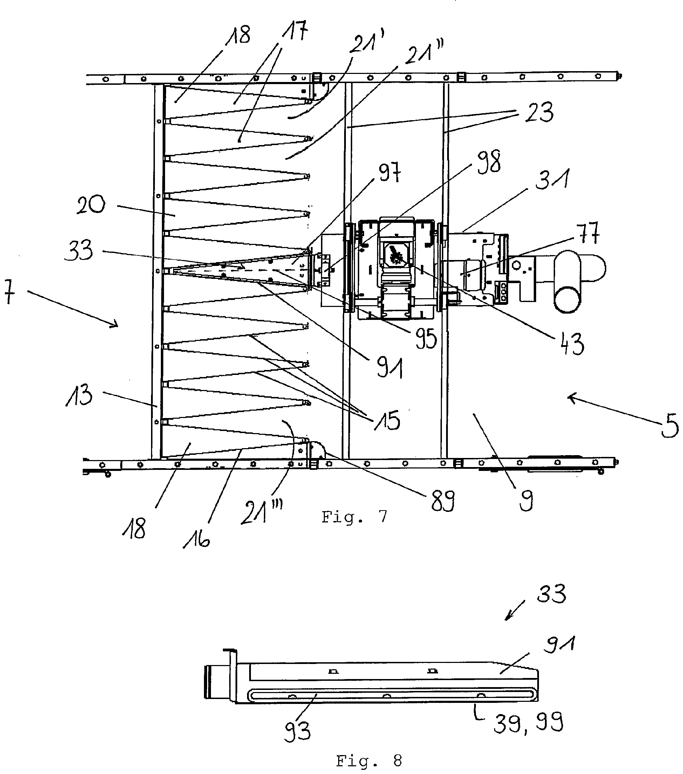

Die Trennwand 3 umfasst einen Tragrahmen 13, an welchem mehrere vom Tragrahmen 13 in Richtung des Schmutzluftraums 5 abstehende Filterkästen 17 gehalten, insbesondere verschraubt, sind (siehe Fig. 3). Besagte Filterkästen 17 sind in einer Reihe hintereinander am Tragrahmen 13 angeordnet und weisen jeweils zwei sich vom Tragrahmen 13 in den Schmutzluftraum 5 erstreckende und stromaufwärtsseitig an einer Vertikalkante 14 zusammenlaufende, ebene Filterkastenwände 15 auf (siehe auch Fig. 3). Besagte Filterkastenwände 15, welche sich in Draufsicht entlang der Schenkel eines gleichschenkligen Dreiecks erstrecken (siehe auch Fig. 7), umfassen bei der gezeigten Ausführungsform gleichzeitig die filterwirksamen Flächen und werden deshalb fortan als "Filterwände" 15 bezeichnet. Stromaufwärts des Tragrahmens 13 sind die Filterkästen 17 somit durch die Filterwände 15 begrenzt. Ausserdem sind die Filterkästen 17 oben und unten durch eine Bodenplatte 19 bzw. Deckenplatte 20 luftdicht abgeschlossen. Im Bereich des Tragrahmens 13 selber sind die Filterkästen 17 hingegen offen, d.h. sie münden am Tragrahmen 13 in den stromabwärts angeordneten Reinluftraum 7.

Von jeweils zwei einander zugewandten Filterwänden 15 benachbarter Filterkästen 17 wird eine Filtertasche 21 gebildet, welche im Gegensatz zu den Filterkästen 17 lediglich stromabwärts durch die Filterwände 15 begrenzt ist, bzw. stromaufwärtsseitig sowie unten und oben offen ist.

Die Luftreinigungsanlage 1 umfasst weiter eine Horizontalschiene 23, welche oberhalb einer durch das obere Ende 25 der Filterkästen 17 definierten, horizontalen Ebene angeordnet ist und sich parallel zur Längsrichtung des Tragrahmens 13 erstreckt. Die Horizontalschiene 23 umfasst zwei parallel zueinander angeordnete Führungsschienen 27, entlang welcher ein Wagen 29 in horizontaler Richtung hin und her bewegbar geführt ist (siehe Fig. 7). Am Wagen 29 ist ausserdem eine Vertikalschiene 31 befestigt, welche stromaufwärtsseitig der Trennwand 3 bzw. der Filterkästen 17 angeordnet ist. Wird der Wagen 29 entlang der Horizontalschiene 23 bewegt, so bewegt sich mit dieser auch die am Wagen 29 befestigte Vertikalschiene 31.

An der Vertikalschiene 31 ist eine Saugdüse 33 geführt, welche über einen Abluftschlauch 34 mit einer nicht gezeigten Unterdruckquelle verbunden zum Abreinigen der Filterwände 15 einer Filtertasche 21 in der jeweiligen Filtertasche 21 in vertikaler Richtung hoch und runter bewegt wird. Die Saugdüse 33 kann insofern entweder entlang der Vertikalschiene 31 vertikale Hubbewegungen ausführen oder zusammen mit der Vertikalschiene 31 durch Bewegen des Wagens 29 entlang der Horizontalschiene 23 in horizontaler Richtung bewegt werden.

Bei der gezeigten Ausführungsform ist der Tragrahmen 13 mit den daran befestigten Filterkästen 17 auf einer Bodenfläche 9 positioniert und besagter Tragrahmen 13 weist eine Bodenleiste 35 auf, die unterseitig an die Filterkästen 17 und andererseits an die Bodenfläche 9 anschliesst. Die Filterkästen 17 bzw. deren Filterwände 15 sind bei der gezeigten Ausführungsform ausschliesslich vom Tragrahmen 13 gehalten und nicht in Kontakt mit der Bodenfläche 9. Das heisst, dass ausser dem Tragrahmen 13 bodenseitig keine zusätzlichen Stützelemente für die Filterkästen 17 vorhanden sind (wie auch in Fig. 3 ersichtlich). Die Unterseite 39 der Filterkästen 17 ist somit in vertikaler Richtung von der Bodenfläche 9 beabstandet, wobei dieser Bodenabstand etwa der Höhe der Bodenleiste 35 entspricht. Die Funktion dieser von der Bodenfläche 9 in vertikaler Richtung beabstandeten Anordnung der Filterkästen 17 wird nachfolgend erläutert werden.

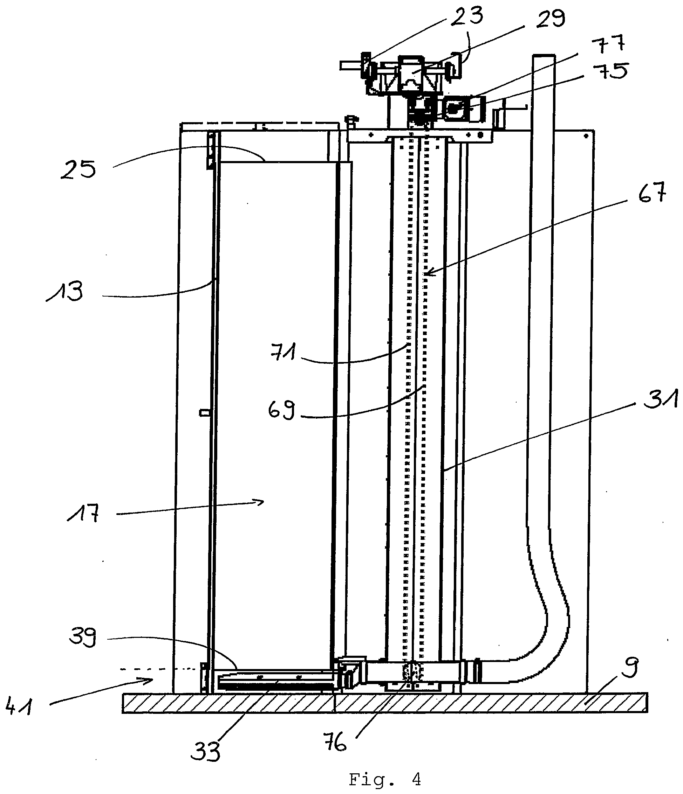

Fig. 1 zeigt die Saugdüse 33 in einer unteren Endlage 37, in welcher sie sich unterhalb der Filterkästen 17, bzw. im freien unteren Zwischenraum 41 (siehe auch Fig. 4) zwischen der Bodenfläche 9 und der Unterseite 39 der Filterkästen 17, befindet. Die vertikale Abmessung der Düse ist kleiner als der Abstand der Filterkästen 17 zur Bodenfläche 9, bzw. Höhe der Bodenleiste 35, und auch viel kleiner als die vertikale Abmessung (Höhe) der Filterwände 15. Da die Filtertaschen 21 nach unten hin offen sind, kann die Saugdüse 33 zum Wechseln von einer Filtertasche 21 in eine benachbarte Filtertasche 21" unter dem die beiden Filtertaschen 21, 21" trennenden Filterkasten 17 hindurch bewegt werden. (Sofern nicht von einer bestimmten Filtertasche die Rede ist, wird den Filtertaschen das allgemeine Bezugszeichen 21 zugeordnet.) Die Saugdüse 33 ist somit unterhalb aller beidseitig von Filtertaschen flankierten Filterkästen 17 bewegbar. Wenn die Saugdüse 33 im Zuge eines solchen Filtertaschenwechsels im freien unteren Zwischenraum 41 bewegt wird, kann gleichzeitig auch die Bodenfläche 9 unter den Filterkästen 17 gereinigt werden. Dies verhindert, dass sich an den Filterwänden 15 abgeschiedenes Staub- und Fasermaterial auf der Bodenfläche 9 ansammelt und es dadurch zu Verstopfungen und/oder Blockierungen der Saugdüse 33 kommen kann. Ausserdem erübrigt sich eine separate Reinigung der Bodenfläche 9, z.B. mit einem zusätzlichen Sauger, was eine wesentliche Zeitersparnis beim Luftreinigungsprozess erlaubt.

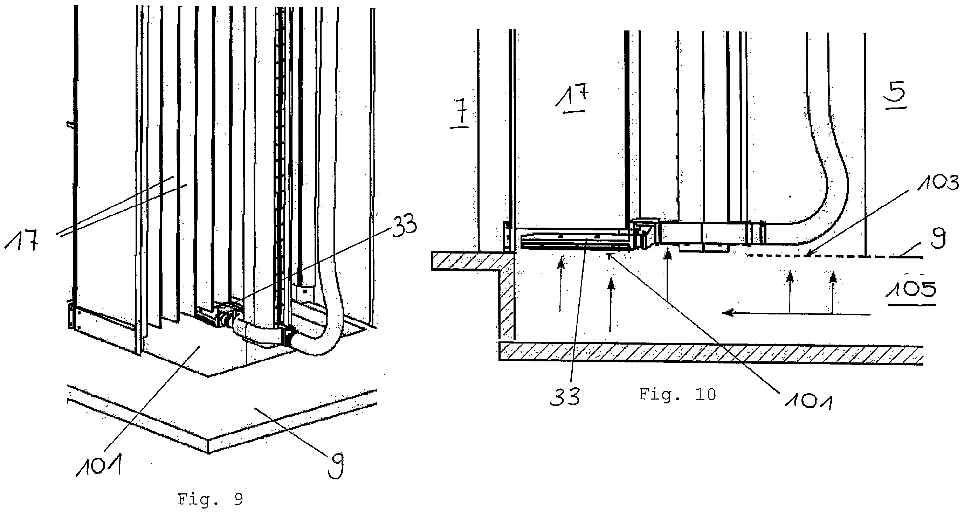

Im Sinne der vorliegenden Erfindung wird die Saugdüse 33 in jeder einzelnen Filtertasche 21 mindestens einmal in Vertikalrichtung hoch und runter bewegt, wobei, wie oben erwähnt, die Saugdüse 33 nach dem Abreinigen einer Filtertasche 21, z.B. der ersten Filtertasche 21', jeweils unterhalb eines dazwischenliegenden Filterkastens 17 von besagter erster Filtertasche 21' in die benachbarte Filtertasche 21" bewegt wird. Nach der Reinigung der letzten zu reinigenden Filtertasche 21''' wird die Saugdüse 33 unterhalb aller beidseitig von Filtertaschen 21 flankierten Filterkästen 17 bis in eine Ausgangsposition 103 (siehe Fig. 10), in welcher sich die Saugdüse 33 direkt unterhalb der ersten Filtertasche 21' befindet, zurückgefahren und der Reinigungsprozess kann bei der ersten Filtertasche 21' erneut beginnen. Durch die horizontale und vertikale Bewegung der Saugdüse 33 können während einem Reinigungszyklus die gesamte Filterfläche und die darunterliegende Bodenfläche 9 lückenlos gereinigt werden.

Die Bewegung der Saugdüse 33 unterhalb der Filterkästen 17 von einer Filtertasche 21 in die nächste erfolgt durch Bewegen des Wagens 29 mit der daran befestigten Vertikalschiene 31 entlang der Horizontalschiene 23. Der Antrieb des Wagens 29 entlang der Horizontalschiene 23 erfolgt mithilfe eines Horizontalantriebs 43, z.B. eines Getriebe- und/oder Elektromotors, welcher am Wagen 29 befestigt ist und mindestens ein Wagenrad 45, bevorzugt zwei Wagenräder 45 oder alle vier Wagenräder 45, reversierend antreibt.

Der Wagen 29 inkl. Vertikalschiene 31 wird jeweils entlang der Horizontalschiene 23 um die Distanz zwischen zwei benachbarten Filtertaschen 21 weiterbewegt und dann gestoppt, um anschliessend die Saugdüse 33 innerhalb einer Filtertasche 21 mindestens einmal auf und ab zu bewegen. Die Steuerung der Auf- und Abbewegung der Saugdüse 33 entlang der Vertikalschiene 31 und der Horizontalbewegung des Wagens 29 bwz. der Saugdüse 33 entlang der Horizontalschiene 23 wird weiter unten im Zusammenhang mit Fig. 7 detaillierter erläutert werden.

Wie aus Fig. 2 ersichtlich, umfasst jeder Filterkasten 17 einen selbsttragenden Filterkastenrahmen 47, welcher durch folgende Elemente gebildet wird: die Bodenplatte 19 sowie die Deckenplatte 20, drei Vertikalstreben 49 sowie mehrere Horizontalstreben 51. Die Bodenplatte 19 und die Deckenplatte 20 weisen jeweils eine kongruente, dreieckförmige Grundfläche auf und sind in vertikaler Richtung voneinander beabstandet sowie parallel zueinander angeordnet. Die Eckpunkte der beiden Platten sind jeweils über die Vertikalstreben 49 verbunden. Der horizontale Querschnitt eines Filterkastens 17 entspricht somit der Grundfläche der Boden- bzw. Deckenplatte 19 bzw. 20, was in der dargestellten Ausführungsform einem gleichschenkligen Dreieck entspricht. Die Basis des gleichschenkligen Dreiecks definiert hierbei die Rückseite des Filterkastens 17, während die beiden Schenkel die Seiten des Filterkastens 17 definieren. Um die Stabilität des Filterkastenrahmens 47 zu erhöhen, sind die Vertikalstreben 49 untereinander mittels der Horizontalstreben 51 verbunden, wobei jeweils drei Horizontalstreben 51 in einer Ebene angeordnet sind und somit ein zur Boden- oder Deckenplatte 20 kongruentes, gleichschenkliges Dreieck aufspannen.

Die Boden- und Deckenplatte 19 und 20 weisen eine Boden- bzw. Deckenleiste 53, bzw. 54 auf, welche sich ausgehend von den Kanten der Boden- bzw. Deckenplatte 19 bzw. 20 im Wesentlichen rechtwinklig zur jeweiligen Platte entlang der Vertikalstreben 49 erstreckt. Auf der Rückseite des Filterkastens 17 weisen die Boden- und Deckenleiste 53, 54 jeweils eine durchgehende Durchgangsbohrung 55, 56 auf, durch welche ein Gewindezapfen 57 eingeführt werden kann, um die Filterkästen 17 mit ihrer Rückseite am Tragrahmen 13 der Trennwand 3 zu befestigen (siehe Fig. 3).

In Fig. 3 ist ein Teil des Tragrahmens 13 mit einigen daran befestigten Filterkästen 17 in Isolation dargestellt. In der Realität ist der Tragrahmen 13 unten durch die Bodenfläche 9, oben durch eine Decke, sowie beidseitig von Seitenwänden der Luftreinigungsanlage 1 begrenzt, die letzteren drei sind aus Gründen der besseren Übersichtlichkeit allerdings nicht gezeigt.

Der Tragrahmen 13 umfasst mehrere, in einer Reihe angeordnete, Vertikalträger 59, die jeweils am unteren Ende an einem bodenseitigen unteren Längsträger 61 und am oberen Ende an einem deckenseitigen oberen Längsträger 62 befestigt sind. Zur Stabilisierung sind die Vertikalträger 59 auf halber Höhe zusätzlich über eine horizontale Mittelstrebe 63 miteinander verbunden. Der obere und untere Längsträger 61, 62 weisen jeweils eine Reihe an Löchern 65 auf, wobei die Anzahl Löcher 65 so gewählt ist, dass mittig zwischen zwei benachbarten Vertikalträgern 59 jeweils ein Loch 65 vorhanden ist. Zwischen zwei benachbarten Vertikalträgern 59 ist somit im unteren sowie im oberen Längsträger 61, 62 ein Loch 65 vorgesehen und die Distanz zwischen diesen beiden Löchern 65 entspricht der Distanz zwischen den Durchgangsbohrungen 55, 56 in der oberen und unteren Bodenleiste 53, 54 eines Filterkastens 17. Wird der Filterkasten 17 mit seiner Rückseite mit den Längsträgern 61, 62 des Tragrahmens 13 in Anlage gebracht, so können die Durchgangsbohrungen 55, 56 in der Bodenleiste 53 bzw. Deckenleiste 54 mit den Löchern 65 in den Längsträgern 61, 62 zur Deckung gebracht werden.

Zur Befestigung der Filterkästen 17 am Tragrahmen 13 wird jeweils eine Befestigungsschraube mit einem Gewindezapfen 57 durch die Durchgangsbohrungen 55, 56 eingeführt, so dass der Schraubenkopf (nicht sichtbar) sich auf der dem Kasteninneren zugewandten Seite der Bodenleiste 53 bzw. Deckenleiste 54 befindet. Die vorstehenden Gewindezapfen 57 der Befestigungsschraube sind bei dem vordersten, noch nicht montierten Filterkasten 17 sichtbar. Besagte Gewindezapfen 57 werden dann durch die Löcher 65 im oberen bzw. unteren Längsträger 62, bzw. 61 geführt und auf der Rückseite (stromabwärtsseitig) mit einer nicht sichtbaren Mutter am Tragrahmen 13 fixiert. Im derart montierten Zustand liegt der Filterkasten 17 rückseitig mit der Bodenleiste 53 bzw. Deckenleiste 54 dichtend am unteren bzw. oberen Längsträger 61, 62 an und wird am Tragrahmen 13 zudem beidseitig von einem jeweiligen Vertikalträger 59 flankiert. Der Abstand zwischen zwei benachbarten Vertikalträgern 59 entspricht im Wesentlichen der Breite der Rückseite des Filterkastens 17, i.e. der Länge der Basis des dreieckigen Horizontalquerschnitts des Filterkastens 17. Dadurch wird gewährleistet, dass die vom Tragrahmen 13 und den daran befestigten Filterkästen 17 gebildete Trennwand 3 für Luft im Wesentlichen lediglich an den Filterwänden 15 durchlässig ist. Wie in Fig. 3 gezeigt, kann der untere Längsträger 61 auch die Bodenleiste 35 bilden.

Die Filterkästen 17 sind somit einzeln am Tragrahmen 13 befestigt und auch einzeln auswechselbar. Dies hat den Vorteil, dass etwa ein einzelner beschädigter Filterkasten 17 problemlos ersetzt werden kann. Da die Filterkästen 17 sowohl von der Bodenfläche 9 (bzw. dem unteren Ende des Tragrahmens 13) als auch von der Decke (bzw. dem oberen Ende des Tragrahmens 13) beabstandet sind, lassen sie sich besonders einfach montieren oder einzeln auswechseln. Oftmals werden die im Bereich der Mitte angeordneten Filterkästen 17 stärker beansprucht als die randseitigen Filterkästen 18 (siehe Fig. 7). So können die innenliegenden Filterkästen 17 häufiger ersetzt werden als die randseitigen 18 und können gegebenenfalls auch in Bezug auf die Porengrösse, Maschenweite oder Material des Filtermaterials unterschiedlich ausgebildet sein.

Die Filterwände 15 können auch aus mehreren gleichartigen Filterkästen 17 aufgebaut sein, welche in vertikaler Richtung übereinander angeordnet und miteinander verbunden sind (in Fig. 3 mit gestrichelten Linien angedeutet).

Die Filterwände 15 umfassen bei der gezeigten Ausführungsform einen äusseren Rahmen, an welchem ein filterwirksames Material, insbesondere ein Filtervlies, gehalten ist. Das Filtervlies ist an der Unterseite 39 bzw. einem unteren Rand des Filterkastens 17 befestigt und über die gesamte Oberfläche der Filterwand 15 nach oben gespannt. Insbesondere bei grossflächigen Filterwänden können die äusseren Rahmenteile gegebenenfalls über zusätzliche Streben verbunden sein, um eine zusätzliche Auflagefläche für das Filtervlies zu bieten. Das Filtervlies ist ausreichend feinporig ausgebildet, um Teilchen, Fasern oder Partikel einer vorbestimmten Größe zurückzuhalten. Die Aussenflächen der Filterwände 15 bilden daher die Schmutzluftseite.

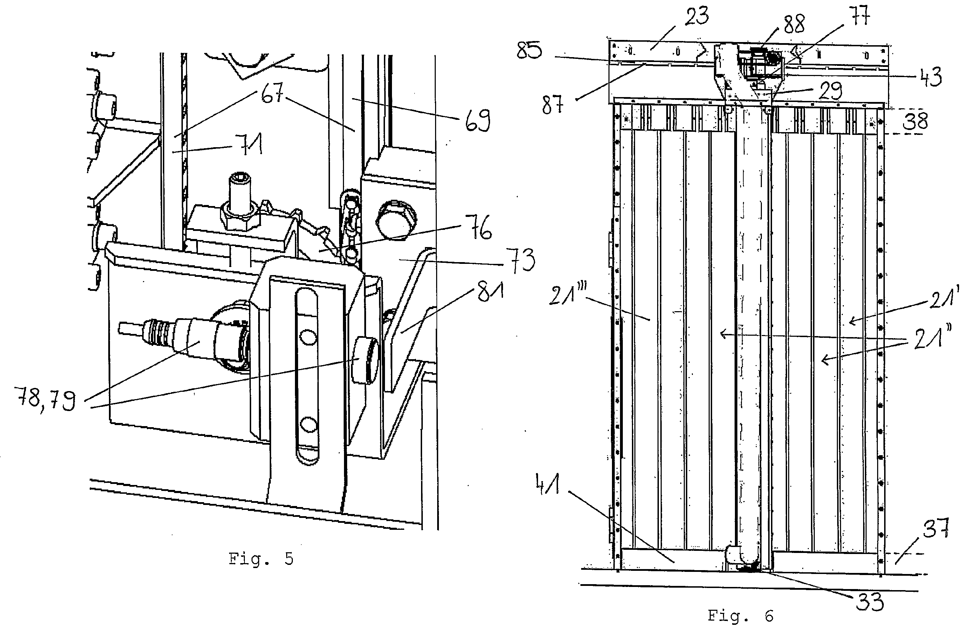

Fig. 4 zeigt die in Fig. 1 dargestellte Luftreinigungsanlage 1 in einer Seitenansicht. Die Saugdüse 33 ist mit einem innerhalb der Vertikalschiene 31 angeordneten endlosen Zugorgan 67 (mit gestrichtelten Linien angedeutet) verbunden, welches der hoch und runter Bewegung der Saugdüse 33 dient und ein vorderes Trum 71 sowie ein hinteres Trum 69 aufweist. Die Saugdüse 33 ist am vorderen Trum 71 befestigt, während am hinteren Trum 69 ein Endschalterbetätigungselement 73 fixiert ist (siehe Fig. 5).

Das endlose Zugorgan 67 ist in einem oberen und unteren Endbereich der Vertikalschiene 31 jeweils um eine obere bzw. untere Umlenkrolle geführt 75, 76, wobei die obere Umlenkrolle 75 in Vertikalrichtung weiter unten als die Horizontalschiene 23 und weiter oben als das oberen Ende 25 der Filterkästen 17 angeordnet ist. Die untere Umlenkrolle 76 (siehe auch Fig. 5) ist etwa auf Höhe der Bodenleiste 35 somit etwas weiter unten als die Unterseite 39 der Filterkästen 17 positioniert. Durch Antreiben der oberen Umlenkrolle 75 wird das Zugorgan 67 und die mit dem Zugorgan 67 verbundene Saugdüse 33 bewegt. Im vorliegenden Falle ist die obere Umlenkrolle 75 über einen Vertikalantrieb 77, insbesondere einen reversierender Elektromotor, angetrieben, welcher am Wagen 29 befestigt und über Endschalter gesteuert ist. Bei der gezeigten Ausführungsform werden zur Steuerung induktive, kontaktlose Endschalter 79 verwendet (siehe Fig. 5) ; allerdings könnte ohne Weiteres auch lichtsensorische oder mechanische Endschalter eingesetzt werden.

An dieser Stelle sei erwähnt, dass anstelle von Zugorgan 67 und Vertikalschiene 31 natürlich auch eine andere Art von Hubantrieb verwendet werden kann, beispielsweise indem die Saugdüse mit einer Laufmutter verbunden ist und sich die Laufmutter entlang einer von einer am Wagen befestigten, vertikal angeordneten und in beiden Drehrichtungen reversierend von einem Motor antreibbaren Gewindespindel bewegt.

In Fig. 5 sind die untere Umlenkrolle 76 sowie ein unterer induktiver Endschalter 78 vergrössert dargestellt. Der induktive Endschalter 78 umfasst ein am Zugorgan 67 befestigtes metallisches Endschalterbetätigungselement 73 sowie einen induktive Positionssensor 79. Das Endschalterbetätigungselement 73 ist am Zugorgan 67 (siehe Fig. 4), bzw. an dessen hinteren Trum 69, befestigt und dient dazu, die obere bzw. untere Endlage der Saugdüse 33 bei ihrer Auf- und Abbewegung innerhalb einer Filtertasche zu definieren. Die Saugdüse 33 ist mit dem vorderen Trum 71 verbunden, was bedeutet, dass sich die Saugdüse 33 und das Endschalterbetätigungselement 73 entgegengesetzt zueinander bewegen. Zum Beispiel wird während eines Aufwärtshubs die obere Umlenkrolle vom Vertikalantrieb 77, (etwa einem Stellmotor), im Gegenuhrzeigersinn angetrieben und damit wird die am vorderen Trum 71 befestigte Saugdüse 33 nach oben bewegt, während sich das hintere Trum 69 mit dem daran befestigten Endschalterbetätigungselement 73 nach unten bewegt.

Das Endschalterbetätigungselement 73 weist einen metallischen (elektrisch leitfähigen) Betätigungsarm 81 auf, welcher am Ende eines Aufwärtshubs der Saugdüse 33 vom unteren Positionssensor 79 und am Ende eines Abwärtshubs von einem oberen induktiven Positionssensor (nicht gezeigt) durch detektiert wird. Die in Fig. 5 dargestellte Momentaufnahme zeigt die Position des Endschalterbetätigungselements 73 am Ende einer Aufwärtshubbewegung der Saugdüse 33, zu welchem Zeitpunkt sich der Betätigungsarm 81 auf der Höhe des unteren Positionssensors 79 befindet. Zu diesem Zeitpunkt hat Saugdüse 33 also die obere Endlage 38 erreicht und der metallische Betätigungsarm 81 wird vom unteren Positionssensor 79 erkannt bzw. detektiert.. Die Detektion des metallischen Betätigungsarms 81 durch den Positionssensor 79 erfolgt induktiv und kontaktlos, worauf der Positionssensor 79 ein Signal an den Vertikalantrieb 77 sendet, um einen Wechsel der Antriebsrichtung für den Vertikalantrieb 77 zu initiieren. Im vorliegenden Falle würde der Vertikalantrieb 77 daraufhin die obere Umlenkrolle 75 also im Uhrzeigersinn antreiben und die Saugdüse 33 nach unten bewegt.

Anstelle eines induktiven kontaktlosen Endschalters können natürlich auch andere, z.B. optische oder mechanische Endschalter zur Anwendung kommen.

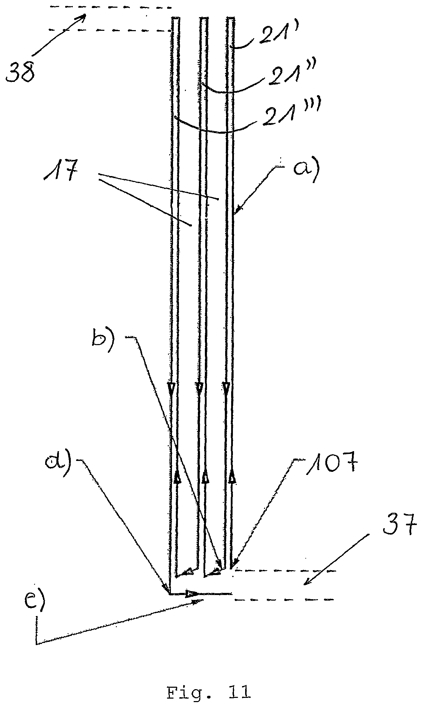

Wenn die Saugdüse 33 die untere Endlage 37 erreicht, wird durch das Endschalterbetätigungselement 73 der im Bereich der oberen Umlenkrolle 75 angeordnete obere Positionssensor (nicht gezeigt) betätigt. Die Betätigung des oberen Endschalters initiiert allerdings nicht nur einen Wechsel der Antriebsrichtung, sondern bewirkt zusätzlich ein kurzzeitiges Abschalten bzw. Pausieren des Vertikalantriebs 77 - nämlich solange, bis die Saugdüse 33 den Wechsel von der gegenwärtigen Filtertasche 21 in die nächste Filtertasche 21" vollzogen hat (siehe Fig. 6). Nach Vollendung des Filtertaschenwechsels unterhalb der Filterkästen 17 wird der Vertikalantrieb 77 wieder aktiviert, allerdings unter Richtungsumkehr, also entgegen der vorherigen Antriebsrichtung (siehe Fig. 11).

Fig. 6 zeigt eine Frontalansicht, mit Blick in Strömungsrichtung auf die Trennwand 3. Um die von der Saugdüse 33 beim Filtertaschenwechsel zurückzulegende Strecke zwischen zwei benachbarten Filtertaschen 21 zu definieren, ist der Horizontalschiene 23 eine Codierschiene 85 zugeordnet, welche für jede Filtertasche 21 ein Codierelement 87 in Form einer Ausnehmung aufweist. Der Wagen 29 weist einen Sensor 88 auf, welcher dazu dient, den Horizontalantrieb 43 bei Erkennen eines Codierelements 87 zu stoppen und daraufhin die Vertikalbewegung der Saugdüse 33 zu iniziieren. Während der Wagen 29 entlang der Horizontalschiene 23 bewegt wird, tastet der Sensor 88 die Codierschiene 85 kontinuierlich, z.B. induktiv, mechanisch oder lichtsensorisch, ab. Sobald der Sensor 88 ein Codierelement 87 - im vorliegenden Fall eine Ausnehmung - detektiert, werden ein Stoppsignal an den Horizontalantrieb 43 und ein Aktivierungssignal an den Vertikalantrieb 77 geleitet (die Antriebe 43 und 77 sind in Fig. 7 deutlicher ersichtlich).

Für die spezifische Ausgestaltung von Sensor 88 und Codierelement 85 gibt es diverse Möglichkeiten. Neben der gezeigten Variante, kann die Erfassung der Position des Wagens auch etwa mithilfe von induktiven oder optischen Schaltungen erfolgen.

Die Erkennung des Codierelements 87 durch den Sensor erfolgt in der Regel kurz bevor der Wagen 29 die gewünschte Stoppposition erreicht, um der Trägheit des Wagens 29 Rechnung zu tragen. Da der Vertikalantrieb 77 erst nach Erreichen der Stoppposition des Wagens 29 aktiviert werden soll, wird das Signal an den Vertikalantrieb 77 entweder erst kurz nach Aussenden des Stoppsignals ausgesandt oder der Vertikalantrieb 77 ist so gesteuert, dass er erst mit einer gewissen Zeitverzögerung nach Eingang des Aktivierungssignals aktiviert wird.

Die Horizontalschiene 23 weist ausserdem auf Höhe der ersten und letzten Filtertasche 21', 21''' jeweils einen induktiven, mechanischen oder lichtsensorischen Endschalter auf (nicht gezeigt), dessen Betätigung bzw. Erkennen das Zurückfahren des Wagens 29 zur Ausgangsposition initiiert. Zum Erkennen des Endschalters kann entweder derselbe Sensor eingesetzt werden, der die Codierelemente 87 entlang der Codierschiene 85 detektiert, oder es kann ein separater Sensor verwendet werden, welcher spezifisch der Erkennung des Endschalters dient.

Wie aus Fig. 7 gut ersichtlich, weisen die Filterkästen in der gezeigten Ausführungsform 17 in Draufsicht einen Querschnitt in Form eines gleichschenkligen Dreiecks auf, wobei die beiden Schenkel durch die sich ausgehend vom Tragrahmen 13 der Trennwand 3 in den Schmutzluftraum 5 erstreckenden Filterwände 15 gebildet sind.

Die Filterkästen 17 sind derart am Tragrahmen 13 befestigt, dass die Trennwand 3 in Draufsicht und im horizontalen Querschnitt einen zick-zack-förmig Verlauf aufweist. Je zwei benachbarte Filterwände 15 sind in Draufsicht V-förmig zueinander angeordnet, wobei die Spitze des "V" stromaufwärts des Tragrahmens 13 durch eine Vertikalkante 14 gebildet ist und die beiden Filterwände 15 an der Vertikalkante 14 einen Winkel von etwa 30° einschliessen. Diese zick-zack-förmige Anordnung hat den Vorteil, dass die filterwirksame Oberfläche gegenüber einer einzigen im Tragrahmen 13 angeordneten, ebenen Trennwand 3 deutlich vergrössert ist.

Wie oben erwähnt, sind die Filterkästen 17 jeweils nur rückseitig, d.h. in Richtung Reinluftraum 7 offen, während sie oben und unten durch die obere bzw. untere Abdeckung 20 bzw. 19 (in Fig. 7 nicht sichtbar) begrenzt sind. In der gezeigten Ausführungsform weisen alle Filterkästen 17 eine einheitliche Form auf, was den Aufbau und insbesondere das Auswechseln der Filterkästen 17 oder einzelnen Filterwänden 15 erleichtert. Jeder Filterkasten 17 umfasst zwei ausgehend vom Tragrahmen 13 in den Schmutzluftraum 5 ragende Filterwände 15, wobei bei den randseitigen Filterkästen 18 allerdings nur eine, nämlich die weiter innen am Tragrahmen 13 angeordnete Filterwand 15 Teil einer Filtertasche 21 ist. Die andere, äussere Filterwand 16 der randseitigen Filterkästen 18 ist hingegen der Seitenwand des Schmutzluftraums 5 zugewandt und kann daher keine beidseitig filterwirksame Filtertasche 21 bilden. Damit sich im Raum zwischen Seitenwand des Schmutzluftraums 5 und äusserster Filterwand 16 eines randseitigen Filterkastens 18 keine Staub- und Faserpartikel ansammeln, ist dieser Raum stromaufwärtsseitig mit einer Frontabdeckung 89 luftdicht abgedeckt.

Frontseitig, d.h. stromaufwärtsseitig, der Filterkästen 17 ist die Vertikalschiene 31 angeordnet, und ausgehend von der Vertikalschiene 31 erstreckt sich die Saugdüse 33 stromabwärts in Richtung der des Tragrahmens 13. Die Saugdüse 33 ist somit an ihrem stromaufwärtsseitigen Ende an der Vertikalschiene 31 rauf und runterbewegbar geführt und ragt hier stromabwärtsseitig in die zentrale fünfte Filtertasche 21 hinein. Insbesondere weist die Saugdüse 33 zwei stromabwärts gegeneinander zulaufende, längsseitige Düsenseitenwände 91 auf, welche den Filterwänden 15 der Filtertasche 21 zugewandt sind. In Bezug auf ihre äussere Form (in Draufsicht gesehen) ist die Saugdüse 33 an die äussere Form des Horizontalquerschnitts der Filtertaschen 21 angepasst. Bei der dargestellten Ausführungsform entspricht die äussere Form der Saugdüse 33 (in Draufsicht) somit entsprechend der Filtertaschen 21 ebenfalls einem gleichschenkligen Dreieck, wobei die horizontale Querschnittsfläche der Saugdüse 33 lediglich geringfügig kleiner ist als jene der Filtertaschen 21. Dadurch wird gewährleistet, dass die durch die Saugdüse 33 angesaugte Luft möglichst nur die Filterfläche absaugt und die Menge an Leckluft möglichst gering gehalten werden kann.

Mithilfe des im Zusammenhang mit Fig. 4 oben beschriebenen Antriebsmechanismus' kann die Saugdüse 33 entlang der Vertikalschiene 31 innerhalb der Filtertasche 21 vertikal auf und ab bewegt werden, wobei sich die Düsenseitenwände 91 parallel zu den zwei die Filtertasche 21 bildenden Filterwänden 15 bewegen. Die Saugdüse 33 weist entlang beider Längsseiten jeweils eine Saugöffnung 93 auf (siehe Fig. 8), durch welche die schmutzluftseitig an den Filterwänden 15 abgeschiedenen Staub- und Faserpartikel abgesaugt werden können. Dank der beidseitigen Saugöffnungen 93 können gleichzeitig beide Filterwände 15 der Filtertasche 21 gereinigt werden.

An dieser Stelle sei erwähnt, dass es natürlich auch möglich ist, die Saugdüse 33 derart auszubilden, dass bei einer Vertikalbewegung innerhalb einer Filtertasche 21 jeweils nur eine Filterwand 15 gereinigt wird. Dafür würde beispielsweise der Innenraum der Saugdüse 33 durch eine in mit gestrichelten Linien angedeutete vertikale Längsmittelwand 95 in zwei getrennte Kammern 97 unterteilt, wobei jeder Kammer 97 eine Saugöffnung 93 zugeordnet ist. Die Saugöffnungen 93 sind ständig offen, allerdings wird jeweils nur eine Kammer 97 mit Saugluft beaufschlagt. Die Zuleitung der Saugluft in die eine oder andere Kammer 97 oder in beide Kammern 97 gleichzeitig kann in bekannter Weise mittels einer Umschalteinrichtung 98, z.B. einer Absperrklappe, gesteuert werden. Wird jeweils abwechselnd nur eine Kammer 97 mit Saugluft versorgt, hat dies gegenüber der oben beschriebenen Variante den Vorteil, dass die von der Unterdruckquelle erbrachte Saugleistung und damit das Saugluftvolumen halbiert oder bei gleichbleibender Saugleistung die Saugwirkung verdoppelt werden kann.

Wie in Fig. 8 gezeigt, sind die Saugöffnungen 93 auf den Längsseiten der Saugdüse 33 schlitzförmig ausgebildet und erstrecken sich im Wesentlichen über die gesamte Länge der Düsenseitenwände 91, um die Filterwände 15 über deren gesamte Breite reinigen zu können, ohne dass die Saugdüse 33 hierfür horizontal bewegt werden muss. Um sowohl die Filterwände 15 als auch die Bodenfläche wirkungsvoll von Fasermaterial und Staub befreien zu können, sind die Saugöffnungen 93 in den beiden Düsenseitenwänden nahe der Unterseite 39 der Düse, bzw. benachbart zum Düsenboden 99, angeordnet.

Anstelle eines Saugschlitzes pro Seitenwand können natürlich auch mehrere Reihen von Saugschlitzen oder Sauglöchern vorhanden sein. Eine schlitzförmige Saugöffnung hat gegenüber einer Reihe von Sauglöchern allerdings den Vorteil, dass durch sie auch sperrigere textile Verunreinigungen, wie Stoffreste oder dgl., problemlos eingesaugt werden können.

Wie in Fig. 9 dargestellt, kann die Luftreinigungsanlage 1 auch keine oder nur eine reduzierte, unterseitig an die Filterkästen 17 anschliessenden Bodenleiste 35 aufweisen und dafür auf einer Bodenfläche 9 positioniert werden, welche unterhalb der Filterkästen 17 eine Bodenöffnung 101 aufweist - wobei anstelle der Bodenöffnung theoretisch auch lediglich eine Vertiefung im Boden vorgesehen sein könnte. In besagter Bodenöffnung 101 kann die Saugdüse 33 im Sinne der vorliegenden Erfindung zum Durchführen des Filtertaschenwechsels unterhalb der Filterkästen 17 hindurch bewegt werden. Da direkt unterhalb der Filterkästen 17 keine Bodenfläche 9 vorhanden ist, entfällt bei dieser Ausführungsform die Bodenreinigungsfunktion der Saugdüse 33. Dafür können dank der Bodenöffnung 101 von den Filterwänden abfallende Staub- und Textilfasern direkt aus der Luftfilteranlage entfernt werden, was die Störungsanfälligkeit der Saugdüse durch Faseransammlungen zusätzlich reduziert.

Wie in Fig. 10 gezeigt, kann ausserdem unterhalb des Schmutzluftraums 5 ein Bodenluftkanal 105 vorgesehen sein, welcher mit dem Schmutzluftraum 5 in Verbindung steht. Der Bodenluftkanal 105 dient insbesondere der Zuleitung der Schmutzluft in den Schmutzluftraum 5. Bei der gezeigten Ausführungsform ist der Bodenluftkanal 105 direkt unterhalb an die Bodenfläche 9 angrenzend angeordnet, so dass Schmutzluftraum 5 und Bodenluftkanal 105 in vertikaler Richtung lediglich durch die Bodenfläche 9 voneinander getrennt sind und über die Bodenöffnung 101 und gegebenenfalls über weitere Öffnungen 103 miteinander in Verbindung stehen. Die weiteren Öffnungen 103 sind in Fig. 3 durch einen Bodenrost realisiert. Die Schmutzluftzufuhr durch die Bodenöffnung 101 und durch den Bodenrost 103 ist in Fig. 10 mit Pfeilen angedeutet.

Durch seine Anordnung unterhalb des Schmutzluftraums 5 ist eine direkte Zuleitung der Schmutzluft aus einem nicht gezeigten, direkt an den Schmutzluftraum 5 angrenzenden Maschinenraum möglich, was eine besonders platzsparende Anordnung der Luftreinigungsanlage in einem industriellen Betrieb erlaubt.

Um das oben im Zusammenhang mit Fig. 1 und 5 beschriebene Bewegungsmuster der Saugdüse 33 zu steuern, umfasst die Luftreinigungsanlage 1 eine am Wagen 29 angeordnete Steuerungseinheit, welche die Ausführung der nachfolgenden, in Fig. 11 schematisch gezeigten, Schritte steuert. Hierbei ist zu beachten, dass als Ausgangspunkt für die Saugdüse 33 eine Ausgangsposition 107 unterhalb einer ersten Filtertasche 21' angenommen wird.
a) Aktivieren des Vertikalantriebs 77 zum Bewegen der Saugdüse 33 in einer Filtertasche 21 entlang der vertikalen Bewegungsbahn von einer unteren Endlage 37 in eine obere Endlage 38 und wieder zurück;
b) Aktivieren des Horizontalantriebs 43 zum Vorwärtsbewegen der Saugdüse 33, nach deren Rückkehr in die untere Endlage 37, unter dem dazwischenliegenden Filterkasten 17 hindurch in eine benachbarte Filtertasche 21'';
c) Wiederholen der Schritte a) und b) bis zum Erreichen einer letzten Filtertasche 21''';
d) Aktivieren des Vertikalantriebs 77 zum Bewegen der Saugdüse 33 in der letzten Filtertasche 21''' entlang der vertikalen Bewegungsbahn von der unteren Endlage 37 in die obere Endlage 38 und wieder zurück,
e) Aktivieren des Horizontalantriebs 43 zum Rückwärtsbewegen der Saugdüse 33, nach deren Rückkehr in die untere Endlage 37, unter allen zwischenliegenden Filterkästen 17 in die Ausgansposition 107 unterhalb der ersten Filtertasche 21'.

Innerhalb einer Filtertasche 21 führt die Saugdüse 33 somit mindestens eine vertikale Aufwärtshubbewegung und eine vertikale Abwärtshubbewegung aus. Bei jedem Hub wird die Saugdüse 33 ausgehend von der bodenseitigen unteren Endlage 37 nach oben in eine Filtertasche 21 bewegt und über die gesamte Höhe der Filterwände 15 entlang diesen geführt. Am Ende eines Reinigungszyklus' wird die Saugdüse 33 dann unterhalb aller Filterkästen 17 wieder in ihre Ausgangsstellung 107 bewegt.

Allgemein sei angemerkt, dass insbesondere bei langen Trennwänden die Verwendung von nicht nur einer sondern mehrerer Reinigungsvorrichtungen mit je einem Wagen, einer Vertikalschiene, Saugdüse und einem Horizontal- sowie Vertikalantrieb sinnvoll sein kann. In diesem Fall würden jeder Saugdüse eine bestimmte Anzahl Filtertaschen zugeordnet, die jeweils von besagter Saugdüse gereinigt werden.

## Patentansprüche

1. Luftreinigungsanlage (1), aufweisend
- eine Trennwand (3) zur räumlichen Trennung eines stromaufwärts angeordneten Schmutzluftraums (5) von einem stromabwärts angeordneten Reinluftraum (7),
wobei die Trennwand (3) einen Tragrahmen (13) und mehrere vom Tragrahmen (13) in Richtung des Schmutzluftraums (5) abstehende Filterkästen (17) aufweist,
die Filterkästen (17) mindestens eine sich vom Tragrahmen (13) in den Schmutzluftraum (5) erstreckende Filterwand (15) aufweisen und die Filterkästen (17) jeweils in den stromabwärts angeordneten Reinluftraum (7) offen sind,
und einander zugewandte Filterwände (15) benachbarter Filterkästen (17) jeweils eine stromaufwärtsseitig offene Filtertasche (21) bilden,
- und eine Filterreinigungseinrichtung mit einer Horizontalschiene (23), an welcher ein Wagen (29) in horizontaler Richtung hin und her bewegbar geführt ist, und
- einer am Wagen (29) befestigten Vertikalschiene (31), an welcher eine Saugdüse (33) zum Abreinigen der Filterwände (15) einer jeweiligen Filtertasche (21) in vertikaler Richtung hoch und runter bewegbar geführt ist,
**dadurch gekennzeichnet, dass**
die Filtertaschen (21) unten offen sind und die Saugdüse (33) zum Wechseln von einer Filtertasche (21) in eine benachbarte Filtertasche (21') unter dem die beiden Filtertaschen (21) trennenden Filterkasten (17) hindurch bewegt wird.

2. Luftreinigungsanlage gemäss Anspruch 1, **dadurch gekennzeichnet, dass** die Filterkästen (17) ausschliesslich vom Tragrahmen (13) gehalten sind.

3. Luftreinigungsanlage gemäss einem der Ansprüche 1 oder 2, **dadurch gekennzeichnet, dass** die Saugdüse (33) beim Wechsel von einer Filtertasche (21) in eine benachbarte Filtertasche (21') lediglich vertikal in Verlängerung der Filtertaschen (21) und unterhalb der Filterkästen (17) parallel zur Horizontalschiene (23) bewegt wird.

4. Luftreinigungsanlage gemäss einem der Ansprüche 1 bis 3, **dadurch gekennzeichnet, dass** der Tragrahmen (13) eine unterseitig an die Filterkästen (17) anschliessende Bodenleiste (35) umfasst und eine Bodenebene definiert, von welcher die Filterkästen (17) in vertikaler Richtung beabstandet sind und der Abstand zwischen den Filterkästen (17) und der Bodenebene grösser ist als die vertikale Abmessung der Saugdüse (33).

5. Luftreinigungsanlage gemäss einem der Ansprüche 1 bis 4, **dadurch gekennzeichnet, dass** die Saugdüse (33) einen Düsenboden (99) sowie zwei vom Düsenboden (99) bevorzugt wenigstens annähernd rechtwinklig abstehende Düsenseitenwände (91) aufweist und die Düsenseitenwände (91) benachbart zum Düsenboden (99) jeweils eine Saugöffnung (93) aufweisen.

6. Luftreinigungsanlage gemäss Anspruch 5, **dadurch gekennzeichnet, dass** die Saugdüse (33) zwei Düsenkammern (97) aufweist, jeder Düsenkammer (97) eine Saugöffnung (93) zugeordnet ist und eine Umschalteinrichtung vorhanden ist, mittels welcher entweder beide Düsenkammern (97) gleichzeitig oder im Wechsel nur eine einzelne Düsenkammer (97) mit Saugluft beaufschlagt wird.

7. Luftreinigungsanlage gemäss einem der Ansprüche 1 bis 6, **dadurch gekennzeichnet, dass** die Filterkästen (17) in Draufsicht eine rechteckige oder eine sich stromaufwärtsseitig verjüngende, insbesondere dreieckige oder trapezförmige, und bevorzugt über die ganze Höhe der Filterkästen (17) eine gleichbleibende, äussere Form aufweisen.

8. Luftreinigungsanlage gemäss einem der Ansprüche 1 bis 17, **dadurch gekennzeichnet, dass** - in Draufsicht - die äussere Form der Saugdüse (33) wenigstens annähernd der äusseren Form der Filtertaschen (21) entspricht.

9. Luftreinigungsanlage gemäss einem der Ansprüche 1 bis 8, **dadurch gekennzeichnet, dass** die Filterkästen (17) einzeln am Tragrahmen (13) austauschbar, sind und bevorzugt einen stabilen Filterkastenrahmen (47) aufweisen, an welchem die Filterwände (15) gehalten sind.

10. Luftreinigungsanlage gemäss einem der Ansprüche 1 bis 9, **dadurch gekennzeichnet, dass** in vertikaler Richtung zwei oder mehr Filterkästen (17) übereinander angeordnet sind.

11. Luftreinigungsanlage gemäss einem der Ansprüche 1 bis 10, **dadurch gekennzeichnet, dass** die Saugdüse (33) mit einem endlosen Zugorgan (67) verbunden ist, das Zugorgan (67) in einem oberen und unteren Endbereich der Vertikalschiene (31) um jeweils eine obere bzw. untere Umlenkrolle (75, 76) geführt ist und der Vertikalschiene (31) ein vorzugsweise am Wagen (29) befestigter Vertikalantrieb (77) zugeordnet ist, welcher eine der Umlenkrollen (75, 76) antreibt.

12. Luftreinigungsanlage gemäss Anspruch 11, **dadurch gekennzeichnet, dass** der Vertikalantrieb (77) ein reversierender Elektromotor ist und vorzugsweise über induktive, mechanische oder lichtsensorische Endschalter (79, 80) gesteuert ist.

13. Luftreinigungsanlage gemäss einem der Ansprüche 1 bis 12, **dadurch gekennzeichnet, dass** die horizontale Bewegung des Wagens (29) entlang der Horizontalschiene (23) mithilfe eines Antriebs, insbesondere eines Getriebe- und/oder Elektromotors, erfolgt, welcher auf dem Wagen (29) angeordnet ist, mindestens ein Wagenrad (45) reversierend antreibt und vorzugsweise über induktive, mechanische oder lichtsensorische Endschalter gesteuert ist.

14. Luftreinigungsanlage gemäss einem der Ansprüche 1 bis 13, **dadurch gekennzeichnet, dass** der Horizontalschiene (23) eine Codierschiene (85) zugeordnet ist, welche für jede Filtertasche (21) ein Codierelement (87), vorzugsweise eine Ausnehmung, aufweist und der Wagen (29) ein Sensorelement aufweist, welches dazu dient, die Bewegung des Wagens (29) entlang der Horizontalschiene (23) bei Erkennen eines Codierelements (87) zu stoppen und vorzugsweise die Vertikalbewegung der Saugdüse (33) zu iniziieren.

15. Luftreinigungsanlage gemäss einem der Ansprüche 1 bis 14, **gekennzeichnet durch** eine vorzugsweise am Wagen (29) angeordnete Steuerungseinheit, welche für die Saugdüse (33) - ausgehend von einer Ausgangsposition (103) unterhalb einer ersten Filtertasche (21') - das folgende Bewegungsmuster steuert:
a) Aktivieren des Vertikalantriebs (77) zum Bewegen der Saugdüse (33) in einer Filtertasche (21, 21') entlang der vertikalen Bewegungsbahn von einer unteren Endlage (37) in eine obere Endlage (38) und wieder zurück;
b) Aktivieren des Horizontalantriebs (43) zum Vorwärtsbewegen der Saugdüse (33), nach deren Rückkehr in die untere Endlage (37), unter dem zwischenliegenden Filterkasten (17) hindurch in eine Position unterhalb einer benachbarten Filtertasche (21'');
c) Wiederholen der Schritte a) und b) bis zum Erreichen einer letzten Filtertasche (21''');
d) Aktivieren des Vertikalantriebs (77) zum Bewegen der Saugdüse (33) in der letzten Filtertasche (21''') entlang der vertikalen Bewegungsbahn von der unteren Endlage (37) in die obere Endlage (38) und wieder zurück,
e) Aktivieren des Horizontalantriebs (43) zum Rückwärtsbewegen der Saugdüse (33), nach deren Rückkehr in die untere Endlage (37), unter allen zwischenliegenden Filterkästen (17) hindurch in eine Ausgangsposition (103) unterhalb der ersten Filtertasche (21').

## Claims

1. An air purification plant (1), having
- a bulkhead (3) for the spatial separation of a dirty-air space (5), which is disposed upstream, from a clean-air space (7), which is disposed downstream,
wherein the bulkhead (3) has a support frame (13) and a plurality of filter boxes (17) which project from the support frame (13) in the direction of the dirty-air space (5),
the filter boxes (17) have at least one filter wall (15) which extends from the support frame (13) into the dirty-air space (5) and the filter boxes (17) are in each case open in the clean-air space (7) which is disposed downstream,
and filter walls (15), which face one another, of adjacent filter boxes (17) in each case form a filter pocket (21) which is open on the upstream side,
- and a filter cleaning installation having a horizontal rail (23) on which a carriage (29) is guided so as to be movable to and fro in the horizontal direction, and
- a vertical rail (31) which is fastened on the carriage (29) and on which, for cleaning down the filter walls (15) of a respective filter pocket (21), a suction nozzle (33) is guided so as to be movable up and down in the vertical direction,
**characterized in that**
the filter pockets (21) are open at the bottom and, for switching from one filter pocket (21) into an adjacent filter pocket (21'), the suction nozzle (33) is moved through below the filter box (17) which separates the two filter pockets (21).

2. The air purification plant as claimed in claim 1, **characterized in that** the filter boxes (17) are exclusively held by the support frame (13).

3. The air purification plant as claimed in one of claims 1 or 2, **characterized in that** when switching from one filter pocket (21) into an adjacent filter pocket (21') the suction nozzle (33) is merely moved in a vertical manner in the extension of the filter pockets (21) and below the filter boxes (17) in a parallel manner to the horizontal rail (23).

4. The air purification plant as claimed in one of claims 1 to 3, **characterized in that** the support frame (13) comprises a floor strip (35) which adjoins the filter boxes (17) on the lower side and which defines a floor plane from which the filter boxes (17) are spaced in the vertical direction, and the spacing between the filter boxes (17) and the floor plane is greater than the vertical dimension of the suction nozzle (33).

5. The air purification plant as claimed in one of claims 1 to 4, **characterized in that** the suction nozzle (33) has a nozzle base (99) and two nozzle side walls (91) which project in a preferably almost perpendicular manner from the nozzle base (99), and the nozzle side walls (91) in each case have one suction opening (93) which is adjacent to the nozzle base (99).

6. The air purification plant as claimed in claim 5, **characterized in that** the suction nozzle (33) has two nozzle chambers (97), each suction chamber (97) is assigned one suction opening (93), and a switchover installation is present by means of which either both nozzle chambers (97) are simultaneously impinged with suction air or only a single nozzle chamber (97) is alternatingly impinged with suction air.

7. The air purification plant as claimed in one of claims 1 to 6, **characterized in that** the filter boxes (17) in the plan view have an external shape which is rectangular or which tapers toward the upstream side, in particular which is triangular or trapezoidal and preferably remains constant across the entire height of the filter boxes (17).

8. The air purification plant as claimed in one of claims 1 to 7, **characterized in that** in the plan view the external shape of the suction nozzle (33) at least approximately corresponds to the external shape of the filter pockets (21).

9. The air purification plant as claimed in one of claims 1 to 8, **characterized in that** the filter boxes (17) are individually replaceable on the support frame (13) and preferably have a robust filter box frame (47) on which the filter walls (15) are held.

10. The air purification plant as claimed in one of claims 1 to 9, **characterized in that** two or more filter boxes (17) are disposed on top of one another in the vertical direction.

11. The air purification plant as claimed in one of claims 1 to 10, **characterized in that** the suction nozzle (33) is connected to an endless traction member (67), the traction member (67) is in each case guided in an upper and lower end region of the vertical rail (31) about one upper and lower deflection roller (75, 76), respectively, and the vertical rail (31) is assigned a vertical drive (77) which is preferably fastened on the carriage (29) and which drives one of the deflection rollers (75, 76).

12. The air purification plant as claimed in claim 11, **characterized in that** the vertical drive (77) is a reversing electric motor and is preferably controlled by way of inductive, mechanical or light-sensory limit switches (79, 80).

13. The air purification plant as claimed in one of claims 1 to 12, **characterized in that** the horizontal movement of the carriage (29) along the horizontal rail (23) takes place by means of a drive, in particular of a gear motor and/or an electric motor, which is disposed on the carriage (29), reversibly drives at least one carriage wheel (45) and is preferably controlled by way of inductive, mechanical or light-sensory limit switches.

14. The air purification plant as claimed in one of claims 1 to 13, **characterized in that** the horizontal rail (23) is assigned an encoding rail (85) which has one encoding element (87), preferably a clearance, for each filter pocket (21) and the carriage (29) has a sensor element which upon identification of an encoding element (87) serves for stopping the movement of the carriage (29) along the horizontal rail (23) and preferably for initiating the vertical movement of the suction nozzle (33) .

15. The air purification plant as claimed in one of claims 1 to 14, **characterized by** a control unit which is preferably disposed on the carriage (29) and which, proceeding from an initial position (103) below a first filter pocket (21'), controls the following movement pattern for the suction nozzle (33):
a) activating the vertical drive (77) in order to move the suction nozzle (33) in a filter pocket (21, 21') along the vertical movement path from a lower end position (37) into an upper end position (38) and back again;
b) activating the horizontal drive (43) in order to move forward the suction nozzle (33) upon its return to the lower end position (37), through below the filter box (17) lying therebetween into a position below an adjacent filter pocket (21");
c) repeating steps a) and b) until a last filter pocket (21''') is reached;
d) activating the vertical drive (77) in order to move the suction nozzle (33) in the last filter pocket (21''') along the vertical movement path from the lower end position (37) into the upper end position (38) and back again,
e) activating the horizontal drive (43) in order to move back the suction nozzle (33) upon its return to the lower end position (37), through below all filter boxes (17) lying therebetween, into an initial position (103) below the first filter pocket (21').

## Revendications

1. Installation de dépollution d'air (1), comportant
- une paroi de séparation (3), destinée à la séparation physique d'un espace d'air pollué (5) placé en amont d'un espace d'air pur (7), placé en aval,
la paroi de séparation (3) comportant un cadre porteur (13) et plusieurs caissons de filtration (17) débordant du cadre porteur (13), dans la direction de l'espace d'air pollué (5),
les caissons de filtration (17) comportant au moins une paroi de filtration (15) s'étendant du cadre porteur (13) dans l'espace d'air pollué (5) et les caissons de filtration (17) étant ouverts chacun sur l'espace d'air pur (7) placé en aval,
et des parois de filtration (15) qui se font face de caissons de filtration (17) voisins formant respectivement une poche de filtration (21) étant ouverte sur le côté amont,
- et un système de nettoyage de filtre, avec un rail horizontal (23) sur lequel un chariot (29) est guidé en étant déplaçable en aller et retour dans la direction horizontale et
- un rail vertical (31) fixé sur le chariot (29) sur lequel une buse aspirante (33) destinée à décolmater les parois de filtration (15) d'une poche de filtration (21) respective est guidée en étant mobile vers le haut et vers le bas dans la direction verticale,
**caractérisée en ce que**
les poches de filtration (21) sont ouvertes sur le bas et pour remplacer une poche de filtration (21), la buse aspirante (33) est déplacée, dans une poche de filtration (21') voisine, en traversant le dessous du caisson de filtration (17) séparant les deux poches de filtration (21).

2. Installation de dépollution d'air selon la revendication 1, **caractérisée en ce que** les caissons de filtration (17) sont exclusivement maintenus par le cadre porteur (13).

3. Installation de dépollution d'air selon l'une quelconque des revendications 1 ou 2, **caractérisée en ce que**, lors du remplacement d'une poche de filtration (21), la buse aspirante (33) est déplacée dans une poche de filtration (21') voisine uniquement à la verticale dans le prolongement des poches de filtration (21) et en dessous des caissons de filtration (17), à la parallèle du rail horizontal (23).

4. Installation de dépollution d'air selon l'une quelconque des revendications 1 à 3, **caractérisée en ce que** le cadre porteur (13) comprend une baguette de fond inférieur (35) se raccordant sur la face inférieure sur les caissons de filtration (17) et qui définit un plan de fond inférieur, duquel les caissons de filtration (17) sont écartés dans la direction verticale et l'écart entre les caissons de filtration (17) et le plan de fond inférieur est supérieur à la dimension verticale de la buse aspirante (33).

5. Installation de dépollution d'air selon l'une quelconque des revendications 1 à 4, **caractérisée en ce que** la buse aspirante (33) comporte un fond de buse (99), ainsi que deux parois latérales de buse (91), débordant de préférence au moins approximativement à angle droit du fond de buse (99) et, au voisinage du fond de buse (99), les parois latérales de buse (91) comportant chacune un orifice d'aspiration (93).

6. Installation de dépollution d'air selon la revendication 5, **caractérisée en ce que** la buse aspirante (33) comporte deux compartiments de buse (97), à chaque compartiment de buse (97) est associé un orifice d'aspiration (93) et un système de commutation est présent, au moyen duquel soit les deux compartiments de buse (97) simultanément ou en alternance, soit seul un unique compartiment de buse (97) est soumis à de l'air d'aspiration.

7. Installation de dépollution d'air selon l'une quelconque des revendications 1 à 6, **caractérisée en ce que**, vus en élévation, les caissons de filtration (17) présentent une forme extérieure rectangulaire ou se rétrécissant sur le côté amont, notamment triangulaire ou trapézoïdale et de préférence constante sur toute la hauteur des caissons de filtration (17).

8. Installation de dépollution d'air selon l'une quelconque des revendications 1 à 7, **caractérisée en ce que**, vue en élévation, la forme extérieure de la buse aspirante (33) correspond au moins approximativement à la forme extérieure des poches de filtration (21).

9. Installation de dépollution d'air selon l'une quelconque des revendications 1 à 8, **caractérisée en ce que**, les caissons de filtration (17) sont interchangeables individuellement sur le cadre porteur (13) et comportent de préférence un cadre de caisson de filtration (47) stable, sur lequel les parois de filtration (15) sont maintenues.

10. Installation de dépollution d'air selon l'une quelconque des revendications 1 à 9, **caractérisée en ce que** dans la direction verticale, deux ou plusieurs caissons de filtration (17) sont superposés.

11. Installation de dépollution d'air selon l'une quelconque des revendications 1 à 10, **caractérisée en ce que** la buse aspirante (33) est reliée avec un organe de traction (67) sans fin, l'organe de traction (67) est guidé dans une zone d'extrémité supérieure et inférieure du rail vertical (31), autour de chaque fois un galet de renvoi (75, 76) supérieur ou inférieur et au rail vertical (31) est associé un entraînement vertical (77), de préférence fixé sur le chariot (29), lequel entraîne l'un des galets de renvoi (75, 76).

12. Installation de dépollution d'air selon la revendication 11, **caractérisée en ce que** l'entraînement vertical (77) est un moteur électrique réversible et est commandé de préférence par l'intermédiaire d'interrupteurs fin de course (79, 80) inductifs, mécaniques ou capteurs de lumière.

13. Installation de dépollution d'air selon l'une quelconque des revendications 1 à 12, **caractérisée en ce que** le déplacement horizontal du chariot (29) le long du rail horizontal (23) s'effectue à l'aide d'un entraînement, notamment d'un motoréducteur et/ou d'un moteur électrique, lequel est placé sur le chariot (29), entraîne de manière réversible au moins une roue (45) de chariot et est commandé de préférence par des interrupteurs fin de course inductifs, mécaniques ou capteurs de lumière.

14. Installation de dépollution d'air selon l'une quelconque des revendications 1 à 13, **caractérisée en ce qu'**au rail horizontal (23) est associé un rail d'encodage (85), lequel comporte pour chaque poche de filtration (21) un élément d'encodage (87), de préférence un évidement, et le chariot (29) comporte un élément capteur, lequel sert à arrêter le déplacement du chariot (29) le long du rail horizontal (23) lors de l'identification d'un élément d'encodage (87) et de préférence à initier le déplacement vertical de la buse aspirante (33).

15. Installation de dépollution d'air selon l'une quelconque des revendications 1 à 14, **caractérisé par** un module de commande, placé de préférence sur le chariot (29), lequel, en partant d'une position initiale (103) en-dessous d'une première poche de filtration (21'), commande pour la buse aspirante (33) le motif de déplacement suivant :
a) activation de l'entraînement vertical (77), pour le déplacement de la buse aspirante (33) dans une poche de filtration (21, 21'), le long de la trajectoire verticale d'une position inférieure extrême (37) dans une position supérieure extrême (38) et en retour ;
b) activation de l'entraînement horizontal (43) pour le déplacement en avant de la buse aspirante (33), après son retour dans la position inférieure extrême (37), en traversant le dessous du caisson de filtration (17) intermédiaire, dans une position en-dessous d'une poche de filtration (21") voisine ;
c) répétition des étapes a) et b) jusqu'à l'atteinte d'une dernière poche de filtration (21''') ;
d) activation de l'entraînement vertical (77), pour déplacer la buse aspirante (33) dans la dernière poche de filtration (21'''), le long de la trajectoire verticale, de la position inférieure extrême (37) dans la position supérieure extrême (38) et en retour ;
e) activation de l'entraînement horizontal (43) pour le déplacement en retour de la buse aspirante (33) après son retour dans la position inférieure extrême (37), en traversant le dessous de tous les caissons de filtration (17) intermédiaires, dans une position initiale (103), en-dessous de la première poche de filtration (21').
